# EUROPÄISCHE PATENTSCHRIFT

(11) **EP 3 600 853 B1**
(45) Veröffentlichungstag und Bekanntmachung des Hinweises auf die Patenterteilung: **07.02.2024**
(21) Anmeldenummer: 18711601.7
(22) Anmeldetag: 23.03.2018
(51) Int. Cl.: B29C 65/22, B29C 65/38, A61J 1/10

(54) **SCHWEISSWERKZEUG ZUM IMPULSSCHWEISSEN, IMPULSSCHWEISSVERFAHREN UND ALS BEUTEL AUSGEBILDETE MEDIZINISCHE VERPACKUNG**
WELDING TOOL FOR IMPULSE WELDING, IMPULSE WELDING METHODS AND MEDICAL PACKAGING IN THE FORM OF A BAG
OUTIL DE SOUDAGE PAR IMPULSIONS, PROCÉDÉS DE SOUDAGE PAR IMPULSIONS ET EMBALLAGE MÉDICAL SOUS FORME DE SACHET

(30) Priorität: 24.03.2017 EP 17162911
(43) Veröffentlichungstag der Anmeldung: 05.02.2020
(73) Patentinhaber: Fresenius Kabi Deutschland GmbH, 61352 Bad Homburg (DE)
(72) Erfinder: WEGNER, Gerald, 61169 Friedberg (DE); WITTORF, Jörn, 61169 Friedberg (DE)
(74) Vertreter: Fresenius Kabi Deutschland GmbH
(86) Internationale Anmeldenummer: PCT/EP2018/057545
(87) Internationale Veröffentlichungsnummer: WO 2018/172554

(56) Entgegenhaltungen:
- FR-A1- 2 544 612
- JP-A- 2011 177 443
- US-A- 4 856 260
- US-A- 5 993 593

## Beschreibung

### Gebiet der Erfindung

Die Erfindung betrifft ein Schweißwerkzeug zum Impulsschweißen von Kunststofffolien für als Beutel ausgebildete medizinische Verpackungen. Zudem betrifft die Erfindung ein Schweißverfahren mit dem Schweißwerkzeug zum Impulsschweißen. Die Erfindung betrifft des Weiteren eine als Beutel ausgebildete medizinische Verpackung, welche vorzugsweise mit dem erfindungsgemäßen Verfahren hergestellt ist.

### Hintergrund der Erfindung

Aus einer verschweißten Folie bestehende medizinische Beutel sind bekannt. Beispielsweise werden zum Herstellen von solchen medizinischen Verpackungen Polyolefinfolien verwendet.

Die Offenlegungsschrift EP 0 911 141 A2 (Fresenius Medical Care Deutschland GmbH) zeigt eine Vorrichtung sowie ein Verfahren zum Verschweißen von Folien zwecks Herstellung einer medizinischen Verpackung. Gemäß der Lehre dieses Dokuments umfassen die Schweißbacken einen beheizten Bereich sowie einen angrenzenden gekühlten Bereich. Die Schweißbacken werden während des Schweißvorgangs auf die Folie gepresst. Aufgrund des angrenzenden gekühlten Bereiches liegen die Schweißbacken während dieses Schweißvorgangs stets auf einem Bereich nicht plastifizierter Folie auf, so dass die Schweißbacken durch die Folie selbst auseinandergehalten werden. Auf diese Weise wird verhindert, dass Material der Schweißnaht zu den Seiten hin verdrängt wird.

So wird erreicht, dass die Folien im Bereich der Schweißnähte im Wesentlichen dieselbe Materialstärke haben, wie die Gesamtdicke der angrenzenden übereinanderliegenden Folien.

Es ist weiter bekannt, zur Herstellung von als Beutel ausgebildeten medizinischen Verpackungen einen Port zur Entnahme oder zum Zuführen von Flüssigkeiten mit in die Schweißnaht einzuschweißen. Ein Port ist ein Anschlusssystem zur Entnahme oder zum Zuführen von Flüssigkeiten. Ein solcher Port kann zum Beispiel durch einen Schlauchabschnitt oder durch ein spritzgegossenes Bauteil bereitgestellt werden. Ein derartiger Port kann hierzu zum Beispiel ein Einschweißschiffchen umfassen. Ein derartiges Einschweißschiffchen ist beispielsweise in der Patentschrift EP 1 605 891 B1 (Fresenius Kabi Deutschland GmbH) gezeigt.

Insbesondere im Bereich des Ports sind an die Maßhaltigkeit der hierfür verwendeten Bauteile hohe Anforderungen zu stellen.

Die Dokumente US 4,856,260 A und US 5,993,593 A zeigen Schweißverfahren, wobei ein Werkzeug benutzt wird, welches eine Stanzkante zum Trennen der zu verschweißenden Folien in zwei Bereiche aufweist.

Das Dokument JP 2011 177443 A zeigt eine medizinische Verpackung, welche randseitig mittels eines Presswerkzeugs derart gepresst wird, dass sich zwei Bereiche unterschiedlicher Höhe bilden.

Das Dokument FR 2 544 612 A1 zeigt ein Verfahren zum Verschweißen einer medizinischen Verpackung.

### Aufgabe der Erfindung

Der Erfindung liegt daher die Aufgabe zugrunde, ein Schweißwerkzeug und ein Schweißverfahren sowie eine mit einem erfindungsgemäßen Schweißverfahren hergestellte medizinische Verpackung bereit zu stellen, welche höhere Formtoleranzen der verwendeten Materialien zulassen, gleichzeitig aber die positiven Verpackungseigenschaften erhalten bleiben.

### Zusammenfassung der Erfindung

Die Aufgabe der Erfindung wird durch ein Schweißwerkzeug, durch ein Verfahren zum Verschweißen einer Folie sowie durch eine als Beutel ausgebildete medizinische Verpackung nach einem der unabhängigen Ansprüche gelöst.

Bevorzugte Ausführungsformen der Erfindung sind dem Gegenstand der abhängigen Ansprüche, der Beschreibung sowie den Zeichnungen zu entnehmen.

Allgemein sieht die Erfindung vor, das beim Verschweißen durch Erwärmen plastifizierte und damit fließfähige Folienmaterial durch eine Erhöhung der Siegelfläche gezielt zu verschieben bzw. zu verdrängen. Das verdrängte Folienmaterial kann Form- und/oder Maßtoleranzen ausgleichen. Gleichzeitig ist aber die Stärke des Schweißnahtbereichs, der an den Innenraum des Beutels angrenzt nicht wesentlich reduziert.

Die Erfindung sieht ein Schweißwerkzeug zum Impulsschweißen einer Folie aus Kunststoff einer, vorzugsweise medizinischen, Verpackung nach Anspruch 1 vor.

Durch die Erhöhung in der Siegelfläche kann plastifiziertes Kunststoffmaterial der Folie gezielt verschoben werden. Das verschobene Folienmaterial kann Form- und/oder Maßtoleranzen ausgleichen. Das Kunststoffmaterial kann insbesondere zumindest lateral entlang der Schweißnaht verschoben werden. Die Erhöhung kann durch eine Profilierung der Siegelfläche bereitgestellt werden. Sie kann zum Beispiel durch eine zumindest abschnittsweise konvexe Struktur oder durch eine Art Stufe bereitgesellt werden.

Die Erhöhung in der Siegelfläche ist insbesondere nicht dazu geeignet oder ausgebildet, Folien innerhalb der Schweißnaht zu trennen. Die Erhöhung in der Siegelfläche ist oder besitzt keine Schneide zum Trennen der Folie. Die Erhöhung in der Siegelfläche dient im Wesentlichen der gezielten Verdrängung des plastifizierten Kunststoffmaterials. Das Schweißwerkzeug ist vorzugsweise kein Schweißwerkzeug zum Trennschweißen.

Erfindungsgemäß wird die Erhöhung durch ein Plateau bereitgestellt, welches aus einer Oberfläche der Siegelfläche hervorragt. Das Plateau kann vollständig oder abschnittweise eben, geneigt und/oder gekrümmt ausgeführt sein.

Das Plateau wird in einer Ausgestaltung der Erfindung als eine streifenförmige Kontur auf der Siegelfläche bereitgestellt. Insbesondere nimmt das Plateau 30 % bis 80 %, bevorzugt 60 % bis 75 %, der Breite der Schweißnaht ein. Insbesondere wird das Plateau mit einer Höhe zwischen 10 und 100 um, bevorzugt zwischen 20 und 60 um, bereitgestellt.

In einer bevorzugten Ausführungsform ist ein randseitiger, innerer Bereich der Siegelfläche vertieft gegenüber der Erhöhung angeordnet. Der innere Bereich der Siegelfläche ist insbesondere derjenige Bereich der Siegelfläche, welcher den randseitigen, inneren Bereich der Schweißnaht erzeugt. Der innere Bereich der Schweißnaht ist der Bereich, der an den Innenraum des Beutels angrenzt. Dadurch kann eine Schweißnaht hergestellt werden, die an ihrer Innenseite eine größere Dicke besitzt. Eine solche Schweißnaht ist dadurch stabiler ausgeführt. Ein derartiger befüllter Beutel weist bei Druckbeaufschlagung eine höhere Festigkeit auf.

Insbesondere kann auch ein randseitiger, äußerer Bereich der Siegelfläche vertieft gegenüber der Erhöhung angeordnet sein. Der äußere Bereich der Siegelfläche ist insbesondere derjenige Bereich der Siegelfläche, welcher den randseitigen, äußeren Bereich der Schweißnaht erzeugt. Der äußere Bereich der Schweißnaht ist der Bereich, der an den Außenraum bzw. die Umgebung des Beutels angrenzt. Dadurch kann eine Schweißnaht hergestellt werden, die sowohl an ihrer Innenseite als auch an ihrer Außenseite eine größere Dicke besitzt und damit insgesamt stabiler ausgeführt ist.

Das Plateau kann in der Siegelfläche, vorzugsweise in etwa, mittig angeordnet sein. Es kann aber auch in dem äußeren Bereich der Siegelfläche angeordnet sein.

In einer weiteren Ausführungsform weist die Siegelleiste randseitig zu der Siegelfläche einen angrenzenden, inneren Klemmbereich und/oder einen angrenzenden, äußeren Klemmbereich zum Einklemmen der Folie während eines Verschweißens der Folie auf. Dadurch wird während des Verschweißens eine Kavität in dem Schweißwerkzeug gebildet.

Vorzugsweise wird bzw. werden der innere Klemmbereich und/oder der äußere Klemmbereich während des Verschweißens mit einer Temperatur bereitgestellt, welche unterhalb einer Plastifizierungstemperatur der zu verschweißenden Folie liegt. Dadurch kann das im Bereich der Siegelfläche plastifizierte Kunststoffmaterial nicht in den Klemmbereich fließen. Es wird dadurch eine quasi vollständig geschlossene Kavität gebildet.

In einer weiteren Ausführungsform der Erfindung liegt bzw. liegen der randseitige, innere Bereich der Siegelfläche und/oder der randseitige, äußere Bereich der Siegelfläche im Wesentlichen auf einer Höhe mit dem jeweiligen angrenzenden Klemmbereich. Dadurch kann der randseitige Schweißnahtbereich mit einer Dicke hergestellt werden, die im Wesentlichen der Folienstärke entspricht.

Insbesondere durch die Kombination aus Klemmbereich und Profilierung (z.B. als Plateau) wird zumindest ein freier, lateral (entlang der Schweißnaht) gerichteter Materialfluss ermöglicht, um Fertigungstoleranzen der Komponenten (Folie, Port, ...) auszugleichen, ohne in transversaler (quer zur Schweißnaht) Richtung die originale Folienstärke zu verändern oder unkontrollierten Materialaustrieb zu erzeugen.

Das Schweißwerkzeug umfasst zumindest eine, vorzugsweise zwei Schweißbacken, welche auf eine Folie aufdrückbar ist bzw. sind. Eine Schweißbacke oder die Schweißbacken des Schweißwerkzeugs, insbesondere deren Siegelfläche und/oder deren Klemmbereich, wird bzw. werden vorzugsweise unmittelbar auf die Folien gedrückt. Sie steht bzw. stehen in direktem Kontakt mit der zu verschweißenden Folie. Vorzugsweise sind die beiden Schweißbacken im Wesentlichen gleich ausgestaltet. Somit ist das Schweißwerkzeug in einer Ausführungsform im Wesentlichen symmetrisch aufgebaut.

Über die Schweißbacke erstreckt sich entlang der Längsachse der Schweißbacke die Siegelfläche. Die Siegelfläche ist derart erwärmbar, um ein an die Siegelfläche angrenzendes Kunststoffmaterial der zu verschweißenden Folie zu erwärmen und aufzuschmelzen.

Gemäß einer weiteren Ausführungsform der Erfindung umfasst das Schweißwerkzeug eine Membran, welche sich bei Erwärmung aufwölbt und welche zumindest die Siegelfläche umfasst.

Unter einem Aufwölben bei Erwärmung wird ein Wölben der Siegelfläche im unbelasteten Zustand verstanden, also wenn diese nicht durch eine Gegenkraft, die beispielsweise aufgrund des Materials der Schweißnaht, das nicht verdrängt werden kann, vorhanden ist, zurückgehalten wird.

Bei einem Schweißvorgang wölbt sich die Membran somit insbesondere dann, wenn Material in der Schweißnaht fließen und dabei insbesondere Kavitäten aufgrund fertigungsbedingter Formtoleranzen ausgleichen kann.

Der Block, dessen Teil die Membran vorzugsweise ist, ist gemäß einer Ausführungsform der Erfindung aus einem Material mit niedriger thermischen Längenausdehnung, insbesondere aus einer Eisen-Nickel-Legierung gefertigt.

Vorzugsweise besteht zumindest der Teil des Blocks, welcher die Siegelleiste bzw. die Membran umfasst, aus einem Material mit einem thermischen Längenausdehnungskoeffizient α bei 20 - 300 °C von weniger als 10, vorzugsweise von weniger als 5, und besonders bevorzugt von weniger als 2 * 10⁻⁶/K.

Weiter umfasst das Schweißwerkzeug gemäß einer Ausführungsform der Erfindung einen Kühlkörper, welcher insbesondere mit Flüssigkeit gekühlt wird. Auf dem Kühlkörper ist ein elektrischer Heizleiter aufgesetzt. Vorzugsweise ist auf dem Kühlkörper ein Oberteil mit der Siegelleiste aufgesetzt.

Insbesondere umfasst der Kühlkörper einen Vorsprung, der in den Block mit der Siegelleiste bzw. mit der Membran hineinragt und/oder auf welchem der Heizleiter aufgesetzt ist. So ist der Heizleiter direkt angrenzend an die Siegelleiste bzw. an die Membran angeordnet und steht vorzugsweise mit der Siegelleiste bzw. mit der Membran im direkten Kontakt.

Es versteht sich, dass hierfür eine elektrische Isolierung zwischen dem Heizleiter und der Siegelleiste bzw. der Membran vorhanden sein sollte.

Insbesondere ist vorgesehen, dass die Siegelleiste bzw. die Membran, vorzugsweise die gesamte Unterseite des Blocks, mit einer isolierenden Beschichtung, insbesondere mit einer elektrisch isolierenden Oxidschicht und/oder Keramikschicht, wie beispielsweise einer Metall- oder Halbmetall-, insbesondere Siliziumoxidschicht, versehen ist. Vorzugsweise hat die Isolierschicht eine Dicke von unter 50 µm, besonders bevorzugt von unter 10 µm. Es handelt sich insbesondere um eine mittels eines Plasma-Verfahrens abgeschiedene Schicht.

Bei einer weiteren Ausführungsform der Erfindung umfasst das Schweißwerkzeug ein Oberteil mit Ausnehmungen. Diese sind zur Aufnahme des Einschweißabschnitts, beispielsweise des Einschweißschiffchens des Ports ausgebildet. Dabei ist das Schweißwerkzeug derart ausgebildet, dass die Siegelfläche im Bereich des Einschweißabschnitts wärmer ist bzw. stärker erwärmbar ist als in einem angrenzenden Bereich der Siegelfläche, in welchem zwei sich gegenüberliegende Folien miteinander verschweißt werden.

Beim Betrieb des Heizleiters wird also die Siegelfläche im Bereich des Einschweißabschnitts eines Ports stärker erwärmt, insbesondere zumindest zeitweise um zumindest 20°C. Da im Bereich des Ports, insbesondere in seinem Einschweißabschnitt, die Schweißbacke und damit die Siegelfläche nicht unmittelbar und nur durch die zwei Folien getrennt der anderen Siegelfläche der gegenüberliegenden Schweißbacke gegenüberliegt, ist in diesem Bereich ein höherer Energieeintrag von Vorteil, um so das Material auch in diesem Bereich in etwa gleich schnell zu plastifizieren. Dadurch wird ein einstufiger Herstellungsprozess ermöglicht. Der Port kann bei der Herstellung der Schweißnaht gleichzeitig mit in die Schweißnaht eingeschweißt werden.

Um dies zu erreichen, sind verschiedene technische Lösungen möglich.

Gemäß einer Ausführungsform kann im Bereich der Ausnehmung der Heizleiter selbst in seinem Querschnitt verjüngt sein, so dass dieser, in dem Bereich, in welchem das Einschweißschiffchen mit der Folie verbunden werden soll, heißer wird.

Gemäß einer weiteren Ausführungsform kann die Schweißbacke, insbesondere die Siegelleiste bzw. die Membran der Schweißbacke, im Bereich der Ausnehmungen für den Port etwas dünner ausgebildet sein, so dass hier ein verbesserter Wärmeübergang vom Heizleiter zur Siegelfläche hin vorhanden ist.

Gemäß einer weiteren Ausführungsform ist folgendes vorgesehen: Um die Siegelfläche im Portbereich stärker zu erwärmen, ist die Dicke einer Isolierschicht, insbesondere einer Silikonschicht, über die der Heizleiter mit einem Kühlkörper verbunden ist, in diesem Bereich etwas größer gewählt. So wird der Heizleiter im Bereich der Ausnehmungen für den Port schlechter gekühlt, was eine höhere Temperatur beim Aufheizen zur Folge hat.

Bei einer weiteren Ausführungsform der Erfindung umfasst die Siegelfläche im Bereich eines einzuschweißenden Ports, insbesondere im Bereich des Einschweißschiffchens für einen Port, zumindest eine hervorstehende Rippen, vorzugsweise zumindest zwei hervorstehende Rippen.

Insbesondere sind Rippen vorgesehen, welche 0,5 - 1,5 mm breit sind und/oder welche 10 - 60 um hoch sind. Durch diese Rippen wird zusätzlich im Bereich des Einschweißschiffchens des Ports Material zum Fließen gebracht und so insbesondere Kavitäten, etwa aufgrund von Fertigungstoleranzen des Ports, ausgefüllt.

Die Erfindung betrifft ferner die Verwendung des Schweißwerkzeugs nach einem der Ansprüche 1 bis 8 zur Herstellung einer als Beutel ausgebildeten medizinischen Verpackung.

Die vorliegende Erfindung wird auch beschrieben durch ein Impulsschweißverfahren nach Anspruch 10.

Insbesondere durch die Kombination aus dem Klemmbereich und der Kontur der Siegelfläche wird zumindest ein freier, lateral (entlang der Schweißnaht) gerichteter Materialfluss ermöglicht, um Fertigungstoleranzen der Komponenten (Folie, Port, ...) auszugleichen, ohne in transversaler (quer zur Schweißnaht) Richtung die originale Folienstärke wesentlich zu verändern oder unkontrollierten Materialaustrieb zu erzeugen. Insbesondere erfolgt eine vollständige Verschweißung aller Bauteile, solange die Gesamtheit aller Toleranzabweichungen kleiner dem Verdrängungsvolumen der Erhöhung ist.

Der Klemmbereich ist derart kühler oder kühl, dass er mit einer Temperatur bereitgestellt wird, die unterhalb der Plastifizierungstemperatur der zu verschweißenden Folie liegt. Insbesondere liegt die Temperatur des Klemmbereiches während des Verschweißens bei maximal etwa 20°C über Raumtemperatur. Die Folienstärke ist die Dicke der Folie(n), mit welcher die Folie(n) bereitgestellt wurde(n). Die Folienstärke in dem randseitigen inneren Bereich der Schweißnaht bleibt dann, vorzugsweise im Wesentlichen, erhalten, wenn sie gegenüber der Dicke der Folie(n), mit welcher die Folie(n) bereitgestellt wurde(n) um höchstens ± 10 % abweicht.

Vorzugsweise kann das plastifizierte Kunststoffmaterial durch die Erhöhung der Siegelleiste nicht nur lateral sondern auch in einen randseitigen, inneren Bereich der Schweißnaht und insbesondere auch in einen randseitigen, äußeren Bereich der Schweißnaht verschoben werden.

In einer Ausführungsform wird die Erhöhung der Siegelfläche durch eine Erhöhung in der Siegelfläche bereitgestellt. Die Erhöhung ist hier eine strukturelle Erhöhung, welche aus einer Oberfläche der Siegelfläche hervorragt. Vorzugsweise wird die Erhöhung durch ein Plateau bereitgestellt, welches aus einer Oberfläche der Siegelfläche hervorragt. Weitere Erläuterungen zu dem Plateau und mögliche Ausführungsformen sind in der vorstehenden und der nachfolgenden Beschreibung angeführt.

In einer alternativen oder ergänzenden Ausführungsform wird die Erhöhung der Siegelfläche durch eine sich aufwölbende Membran bereitgestellt, wobei die Membran die Siegelfläche umfasst. Weitere Erläuterungen zu der Membran und mögliche Ausführungsformen sind in der nachfolgenden Beschreibung angeführt.

Beim Verschweißen wird eine Schweißbacke mit einer erwärmbaren Siegelfläche auf die Folie gepresst, wobei die Folie randseitig zur Siegelfläche während des Schweißvorgangs in einem Klemmbereich der Schweißbacke eingeklemmt ist.

In einer Ausführungsform wird in der Schweißnaht, vorzugsweise gleichzeitig, zumindest ein Einschweißabschnitt eines Ports mit eingeschweißt. Vorzugsweise wird der Einschweißabschnitt des Ports durch ein Einschweißschiffchen bereitgestellt. Der Einschweißabschnitt kann aber auch durch eine Art Rohr- oder Schlauchabschnitt bereitgestellt werden.

Während des Schweißvorgangs wird vorzugsweise sowohl von der Siegelfläche als auch von einem sich randseitig an die Siegelfläche anschließenden Klemmbereich durch eine Flächenpressung eine Kraft auf die Folie ausgeübt.

Die Klemmbacke wird insbesondere derart stark aufgedrückt, dass sich zumindest zu Beginn des Schweißvorgangs eine über die Siegelfläche und den Klemmbereich gemittelte Kraft von 0,05 bis 5, vorzugsweise von 0,1 bis 1 N/mm² ergibt.

Durch das Einklemmen der Folie im Klemmbereich ist die Folie während des Schweißvorgangs ein Abstandshalter für die Schweißbacken. Im Klemmbereich wird das Werkzeug durch die Folien auseinandergehalten, so dass sich innerhalb der Schweißnaht, zum Beispiel zwischen zwei gegenüberliegenden Siegelflächen oder zwischen der Siegelfläche und dem Einschweißschiffchen des Ports, eine geschlossene Kavität bildet, welche vergleichbar in einem Spritzgussprozess zu finden ist. Das führt dazu, dass das plastifizierte, insbesondere schmelzflüssige, Kunststoffmaterial nicht in nennenswerter Weise neben die Schweißnaht gedrückt wird.

Die Siegelfläche wird während eines Schweißvorgangs zunächst erwärmt, so dass sich das an die Siegelfläche angrenzende Kunststoffmaterial plastifiziert, um eine stoffschlüssige Verbindung einzugehen. Sodann wird die Beheizung abgeschaltet und, sobald sich das Kunststoffmaterial verfestigt hat, wird die Schweißbacke abgehoben. Unter einem Plastifizieren des Kunststoffmaterials wird ein Erwärmen verstanden, derart, dass der Kunststoff zumindest beginnt, in einen schmelzflüssigen Zustand überzugehen, so dass er eine stoffschlüssige Verbindung eingehen kann.

Gemäß einer Ausführungsform der Erfindung wird beim Erwärmen der Siegelfläche im Bereich der Siegelfläche eine höhere Flächenpressung ausgeübt als im Klemmbereich. Dadurch kann das Verdrängen bzw. Fließen des plastifizierten Folienmaterials unterstützt werden.

Gemäß dieser Ausführungsform der Erfindung wird also während des Schweißverfahrens keine Flächenpressung mit im Wesentlichen gleicher Kraft pro Fläche sowohl über den Klemmbereich als auch über die Siegelfläche ausgeübt, sondern es wird im Bereich der Siegelfläche eine höhere Kraft pro Fläche ausgeübt. Vorzugsweise liegt die Kraft im Bereich der Siegelfläche zumindest zeitweise und zumindest abschnittsweise um das 1,5fache höher als im angrenzenden Klemmbereich.

Hierdurch wird zum einen weiterhin erreicht, dass sich im Bereich der Schweißnaht eine geschlossene Kavität ausbildet.

Gleichzeitig baut sich zum anderen innerhalb dieser geschlossenen Kavität aufgrund der größeren Flächenpressung in einem schmelzflüssigen Material ein Druck auf, so dass das schmelzflüssige Material fließen kann, falls hierfür ein Volumen vorhanden ist. Ein solches Volumen kann beispielsweise vorhanden sein durch fertigungsbedingte Toleranzen. Solche Toleranzen können insbesondere an der Außenseite des Einschweißschiffchens eines Ports vorhanden sein. Diese werden so in verbesserter Weise durch Material der zu verschweißenden Folie aufgefüllt. Es kann so auf einfache Weise ein Schweißverfahren bereitgestellt werden, welches höhere Fertigungstoleranzen zulässt.

Die Flächenpressung wandelt sich durch das Verflüssigen des Kunststoffmaterials in einen Druck in der Kavität um, der schmelzflüssiges Material in die Hohlräume insbesondere lateral (in Richtung der Schweißnahtlänge) fließen lässt.

Durch die Erfindung können z.B. Folien miteinander verbunden werden. Es können auch Einschweißabschnitte, beispielsweise Einschweißschiffchen, eines Ports zwischen zwei Folien verschweißt werden, wobei die Folien in einen schmelzflüssigen Zustand übergehen und sich stoffschlüssig mit dem Einschweißabschnitt verbinden. Insbesondere durch die größere Kraft pro Fläche im Bereich der Siegelfläche, also im Bereich der sich bildenden Schweißnaht, können mögliche Einfallstellen ausgefüllt werden.

Die Siegelfläche ist insbesondere als erwärmbare linien- bzw. streifenförmige Fläche ausgebildet, die während eines Schweißzyklus temporär erwärmt wird. Die Erwärmung der Siegelfläche kann insbesondere mit einem widerstandsbeheizten Heizleiter erfolgen.

Zum Einschweißen des Einschweißabschnitts, vorzugsweise des Einschweißschiffchens, eines Ports kann die Siegelfläche nebst angrenzendem Klemmbereich eine Ausnehmung aufweisen. Die Form der Ausnehmung ist dabei an die Form des Einschweißabschnitts eines Ports angepasst. Deren Form ist in einer Ausführungsform der Erfindung an ein an den Rändern spitz zulaufendes Einschweißschiffchen angepasst.

Gemäß einer Ausführungsform der Erfindung wird die höhere Kraft pro Fläche im Bereich der Siegelfläche durch eine sich aufwölbende Membran, welche die Siegelfläche umfasst, ausgeübt.

Unter einer Membran wird ein vorzugsweise dünnwandig ausgebildeter Abschnitt der Schweißbacke, insbesondere eines Oberteils der Schweißbacke, verstanden.

Die Membran ist vorzugsweise randseitig fixiert. Sobald die Membran während eines Schweißzyklus erwärmt wird, dehnt sich diese aus und wölbt sich zumindest dann, wenn keine Gegenkraft entgegensteht, nach vorne, also in Richtung der Folie, auf die so Druck ausgeübt wird. Vorzugsweise liegt die Membran mit ihrer Unterseite auf, insbesondere auf einem Heizdraht. So ist ein Aufwölben nur nach vorne möglich.

Es kann so auf einfache Weise die Kraft pro Fläche im Bereich der Siegelfläche und damit der Druck innerhalb der geschlossenen Kavität, in welcher sich die Schweißnaht befindet bzw. gebildet wird, erhöht werden.

Das erfindungsgemäße Verfahren ist ein Impulsschweißverfahren. In einer Ausführungsform beträgt die Zykluszeit, also die Zeit vom Aufsetzen des Schweißwerkzeugs, Erwärmen der Siegelfläche, Abkühlen und Abheben des Schweißwerkzeugs, weniger als 10, vorzugsweise weniger als 8 und besonders bevorzugt weniger als 5 Sekunden.

Die Membran ist insbesondere derart ausgebildet, dass diese sich im unbelasteten Zustand, also ohne Gegenkraft durch eine anliegende Folie, mindestens 10 µm, vorzugsweise mindestens 15 µm, in Richtung der Folie wölbt.

Die Membran ist vorzugsweise Teil des Oberteils einer Schweißbacke und ist vorzugsweise einstückig mit einem angrenzenden Bereich des Oberteils ausgebildet.

Das Oberteil ist vorzugsweise als Block ausgebildet, welcher die Membran umfasst. Die Membran wird dadurch bereitgestellt, dass der Block im Bereich der Membran ausgedünnt ist.

Bei einem Schweißvorgang wird nur die Siegelfläche, die Teil der Membran ist, nicht aber der angrenzende Klemmbereich, derart erwärmt, dass die in Kontakt stehende Folie plastifiziert wird. Aufgrund dessen dehnt sich der Block nicht oder zumindest weniger aus, so dass die Membran im Übergangsbereich zum Block eingespannt ist und sich aufwölbt, da der Block nicht der Ausdehnung der Membran folgt.

Bei einer weiteren Ausführungsform der Erfindung wird eine Schweißbacke mit einer Siegelfläche verwendet, die zumindest ein aus einer Oberfläche der Siegelfläche hervor ragendes Plateau aufweist.

Die Siegelfläche, deren Höhe randseitig mit der Höhe des Klemmbereichs übereinstimmt, hat also einen verdickten Bereich in Form eines Plateaus.

Das Plateau ist vorzugsweise als plattenförmige Kontur oder Erhebung ausgebildet, welche sich zentral, insbesondere mittig, entlang der Haupterstreckungsrichtung der Siegelfläche erstreckt.

Durch das Plateau wird ebenfalls die Flächenpressung im Bereich der Siegelfläche erhöht. Weiter kann durch das Plateau Material, welches in schmelzflüssigem Zustand ist, in Bewegung versetzt werden und dabei mögliche Kavitäten auffüllen.

Vorzugsweise nimmt das Plateau 30 - 80 %, besonders bevorzugt 60 - 75 %, der Breite der Schweißnaht ein. So lässt sich hinreichend viel schmelzflüssiges Material bewegen, ohne dass die Folienstärke im Endbereich der Schweißnaht wesentlich reduziert wird.

Bei einer Ausführungsform hat das Plateau eine Höhe zwischen 10 und 100 µm, besonders bevorzugt zwischen 20 und 60 µm. Das Plateau ist derart ausgebildet, dass es trotz des Plateaus während des Schweißvorgangs zu einer Flächenpressung sowohl über den Klemmbereich als auch über den Bereich der Siegelfläche kommt. Auch ist so sichergestellt, dass während des Schweißvorgangs kein Material transversal (in Richtung der Nahtbreite) wird.

Die Membran hat, um sich hinreichend aufzuwölben, aber um auch nicht so dünn ausgebildet zu sein, dass die Gefahr des Einreißens besteht, bei einer Ausführungsform der Erfindung eine Dicke von 100 - 1500 µm, vorzugsweise von 300 - 600 µm.

Gemäß einer Ausführungsform der Erfindung wird eine mehrlagige Folie, insbesondere eine mehrlagige Polyolefinfolie, wie beispielsweise eine Polypropylen- oder Polyethylenfolie, verschweißt. Derartige mehrlagige Folien haben verbesserte Eigenschaften hinsichtlich deren Reißfestigkeit. Es hat sich herausgestellt, dass durch das erfindungsgemäße Verfahren insbesondere auch mehrlagige Folien sicher verbunden werden können.

Die für das Verfahren verwendete Folie hat vorzugsweise eine Dicke von 100 bis 500 µm, besonders bevorzugt von 150 bis 300µm.

Unabhängig davon, ob eine einlagige oder mehrlagige Folie verwendet wird, ist gemäß einer Ausführungsform der Erfindung vorgesehen, dass die gesamte Folie während des Schweißverfahrens plastifiziert wird. Insbesondere können alle Lagen einer mehrlagigen Folie während des Schweißverfahrens plastifiziert werden. Dabei wird das gesamte Material im Bereich der Schweißnaht in einen schmelzflüssigen Zustand überführt, wobei durch das seitliche Einklemmen der Folie im Klemmbereich ein geschlossenes Volumen im Bereich der Schweißnaht erzeugt wird. Es muss dabei nicht zu einer Mischung der Schichten der Folie kommen. Die Erfindung kann sich aber auch auf die Verwendung einer mehrlagigen Folie beziehen, die eine dünne Schicht aus einem bei niedrigerer Temperatur schmelzendem Material aufweist, welche als Klebeschicht dient. Bei dieser Ausgestaltung muss nicht das gesamte Material im Bereich der Schweißnaht plastifiziert werden.

Die Erfindung betrifft des Weiteren eine als Beutel ausgebildete medizinische Verpackung nach Anspruch 13.

In einer Ausführungsform kann der Nachbarbereich auch noch durch einen randseitigen, äußeren Bereich der Schweißnaht bereitgestellt werden. Der äußere Bereich der Schweißnaht beschreibt den Bereich, der an die äußere Umgebung angrenzt. Vorzugsweise besitzt der randseitige, äußere Bereich der Schweißnaht eine Dicke, welche im Wesentlichen einer Dicke der Folie oder einer Gesamtdicke der Folien entspricht.

Die Dicke der Folie beschreibt die Folienstärke, mit welcher die Folie bereitgestellt wurde. Die Gesamtdicke beschreibt die Summe der Folienstärken der beiden bereitgestellten Folien, die miteinander verschweißt werden.

Die Dicke der Schweißnaht entspricht, vorzugsweise im Wesentlichen, der Gesamtdicke der zwei Folien, wenn sie um höchstens ± 10 % abweicht.

Dieser ausgedünnte Bereich ist insbesondere als Abdruck der vorstehend beschriebenen Erhöhung, beispielsweise des eingangs beschriebenen Plateaus, ausgebildet.

In diesem Bereich ist die Schweißnaht aufgrund des erzeugten Drucks durch die Erhöhung, z.B. durch das Plateau, in der Dicke reduziert.

Der ausgedünnte bzw. in der Dicke reduzierte Bereich erstreckt sich insbesondere über eine Breite von 30 % - 80 %, vorzugsweise von 60 % - 75 %, der Breite der Schweißnaht. Der ausgedünnte Bereich kann sich zum Beispiel streifenförmig entlang einer Region der Schweißnaht erstrecken. Er kann insbesondere einen Streifen entlang einer zentralen, insbesondere einer mittigen, Region der Schweißnaht bilden. Die Dicke der Folie ist vorzugsweise im ausgedünnten bzw. in der Dicke reduzierten Bereich gegenüber dem angrenzenden Nachbarbereich um zumindest 10 %, vorzugsweise um 10 % bis 30%, reduziert.

Vorzugsweise ist die Folie im ausgedünnten Bereich 15 % bis 25 % dünner als im angrenzenden Bereich der Schweißnaht.

Weiter kann die Schweißnaht einen eingeschweißten Port umfassen. Insbesondere kann die Schweißnaht einen Port mit einem Einschweißschiffchen umfassen, wobei im Bereich des Einschweißschiffchens zumindest ein Abdruck einer Rippe, vorzugsweise zwei Abdrücke zweier Rippen vorhanden ist bzw. sind.

Die Schweißnaht ist vorzugsweise zwischen 1 und 10 mm, besonders bevorzugt zwischen 3 und 7 mm breit.

Eine die Schweißnaht erzeugende Siegelleiste ist vorzugsweise zwischen 5 und 15, besonders bevorzugt zwischen 6 und 12 mm, breit.

Im Bereich der Erfindung liegt zudem auch ein pharmazeutisches Produkt. Es umfasst eine Ausführungsform einer als Beutel ausgebildeten medizinischen Verpackung, wie sie vorstehend beschrieben ist. Der Beutel ist mit einer medizinischen Flüssigkeit befüllt, die vorzugsweise einen Wirkstoff enthält. Eine medizinische Flüssigkeit ist zum Beispiel eine intravenös zu verabreichende Flüssigkeit. Beispiele für eine zu verabreichende Flüssigkeit sind eine Kochsalzlösung, eine Glukoselösung, eine Nährstofflösung für die parenterale Ernährung, eine Emulsion oder dergleichen. Die Wirkstoffe können gelöst und/oder dispergiert in der Flüssigkeit vorliegen.

### Kurzbeschreibung der Zeichnungen

Der Gegenstand der Erfindung soll im Folgenden Bezug nehmend auf ein Ausführungsbeispiel anhand der Zeichnungen Fig. 1 bis Fig. 17 näher erläutert werden.
Fig. 1 ist eine schematische Ansicht einer erfindungsgemäßen medizinischen Verpackung, welche als Beutel ausgebildet ist.
Fig. 2 ist eine Schnittansicht des Schweißwerkzeugs.
Fig. 3 ist eine Detailansicht der Fig. 2.
Fig. 3a und Fig. 3b sind Detailansichten der Fig. 3, in welchen die Ausgestaltung des Heizleiters sowie die Grenze des Klemmbereichs dargestellt sind.
Fig. 4 ist eine perspektivische Ansicht einer Schweißbacke mit aufgelegtem Beutel und teilweise abgenommenem Oberteil.
Fig. 5 ist eine perspektivische Detailansicht einer Schweißbacke mit vollständig abgenommenem Oberteil.
Fig. 6 ist eine perspektivische Innenansicht des Oberteils einer Schweißbacke.
Fig. 7 ist eine perspektivische Detailansicht des Bereiches einer Ausnehmung für das Einschweißschiffchen eines Ports in einer Schweißbacke.
Fig. 8 ist eine perspektivische Darstellung des Portbereichs eines Beutels, welcher mit dem im Fig. 7 dargestellten Schweißwerkezug hergestellt wurde.
Fig. 9 zeigt eine alternative Ausführungsform einer Schweißbacke, welche für die Schweißnähte verwendet wird, bei denen zwei Folien direkt miteinander verbunden werden (ohne Einschweißschiffchen eines Ports).
Fig. 9a ist eine Detailansicht der in Fig. 9 dargestellten Siegelleiste der Schweißbacke.
Fig. 10 ist eine Schnittansicht des Bereichs der Siegelfläche der in Fig. 9a dargestellten Siegelleiste.
Fig. 11 ist eine schematische Schnittansicht S_{F/F} des Bereichs einer Schweißnaht (siehe dazu Fig. 1), die mit dem in Fig. 9 und Fig. 10 dargestellten Schweißwerkzeug hergestellt wurde.
Fig. 12 ist eine Detailansicht des Bereichs der Ausnehmung für das Einschweißschiffchen eines Ports gemäß einer weiteren Ausführungsform der Erfindung, bei welcher die Siegelfläche ein Plateau aufweist.
Fig. 13 ist der Schnitt S_{P/F} einer Schweißnaht im Bereich des Einschweißschiffchens eines Ports (siehe dazu Fig. 1), welche mit dem in Fig. 12 dargestellten Schweißwerkzeug hergestellt wurde.
Fig. 14 ist eine Detailansicht des Portbereichs eines Beutels, der mit dem in Fig. 12 und Fig. 13 dargestellten Schweißwerkzeug hergestellt wurde.
Bezugnehmend auf das Flussdiagramm gemäß Fig. 15 sollen die Schritte eines Ausführungsbeispiels des erfindungsgemäßen Verfahrens erläutert werden.

### Detaillierte Beschreibungen der Zeichnungen

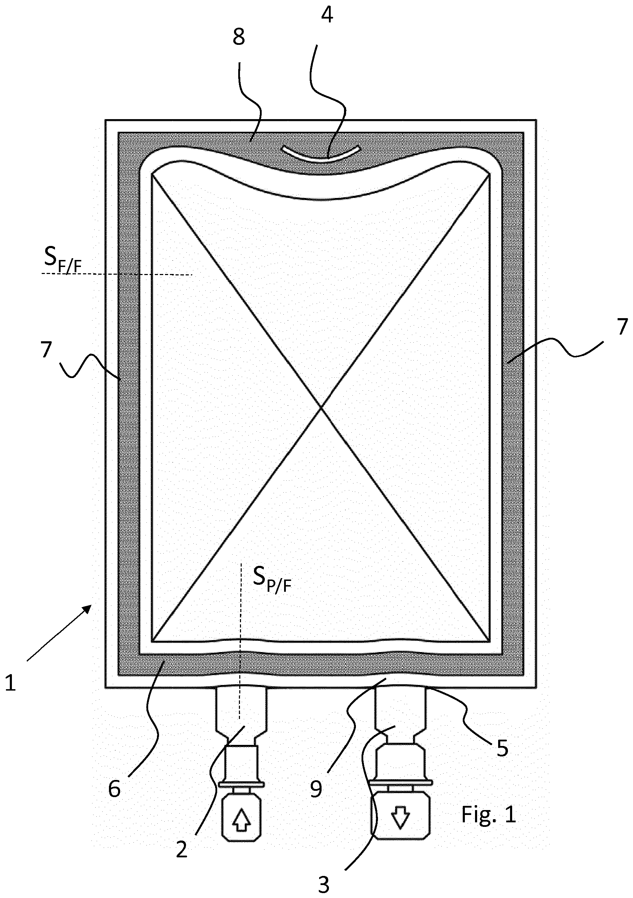

Fig. 1 zeigt eine als Beutel 1 ausgebildete medizinische Verpackung, wie sie gemäß der Erfindung hergestellt werden kann.

Der Beutel 1 umfasst in diesem Ausführungsbeispiel zwei Ports 2, 3, bei dem ein Port 2 zum Zuführen und ein anderer Port 3 zum Entnehmen von Flüssigkeit vorgesehen sind. Die Erfindung kann sich auch auf Beutel 1 beziehen, welchen nur einen Port 5 oder eine Vielzahl von Ports 5 umfassen (hier nicht gezeigt). Zum Beispiel kann ein Beutel 1 ein bis vier Ports 5 besitzen. Die Beutel 1 können zum Beispiel mit einer Kochsalzlösung befüllt sein. Derartige Beutel 1 können insbesondere auch mit einer bereits wirkstoffhaltigen Lösung vorbefüllt sein.

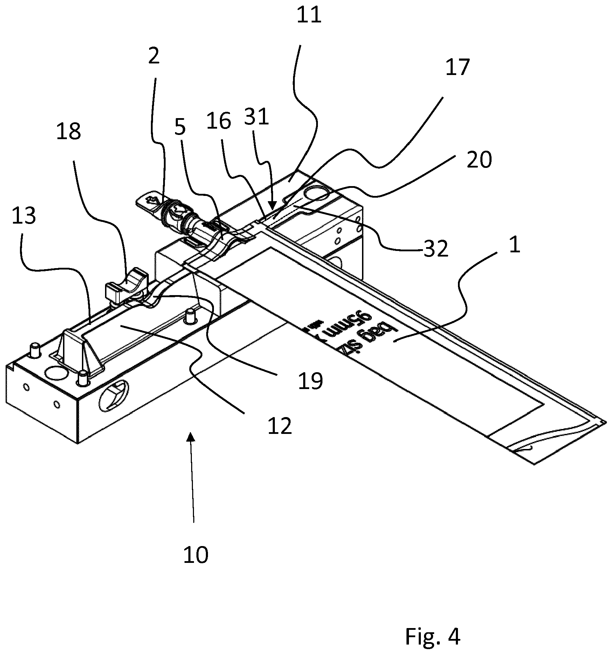

Die Ports 2, 3 sind eingeschweißt und umfassen hierzu jeweils einen Einschweißabschnitt 5. Die hier dargestellten Beispiele zeigen den Einschweißabschnitt 5 jeweils in der Ausgestaltung eines Einschweißschiffchens 5 (siehe dazu auch die Figuren 4, 8 und 14). Die Einschweißabschnitte 5 können auch in der Form eines Rohr- oder Schlauchabschnitts vorliegen.

Die Einschweißschiffchen 5 werden beim Verschweißen der auch als Querschweißnaht bezeichneten Schweißnaht 6 mit in den Beutelrand eingeschweißt und sind daher von der Folie 9, aus welcher der Beutel 1 besteht, überdeckt.

Der Beutel 1 besteht beispielsweise aus einer Polyolefinfolie, insbesondere aus einer Polyethylen- oder Polypropylenfolie.

Neben der Querschweißnaht 6 ist der Beutel 1 noch durch die randseitigen, auch als Längsschweißnähte, bezeichneten Schweißnähte 7 sowie durch die obere Querschweißnaht 8 verschlossen. Im Bereich der oberen Querschweißnaht 8 umfasst der Beutel 1 noch einen Hänger 4.

Der Querschnitt einer Schweißnaht 6, 7, 8, in der zwei Folien 9 direkt (ohne eingeschweißten Port 5) miteinander verschweißt sind, ist mit S_{F/F} gekennzeichnet. Dagegen ist der Querschnitt einer Schweißnaht 6, in der ein Port 5 mit in den Folienrand eingeschweißt ist, mit S_{P/F} gekennzeichnet. Bezugnehmend auf die folgenden Zeichnungen wird erläutert, wie die Schweißnähte 6, 7, 8 gebildet werden.

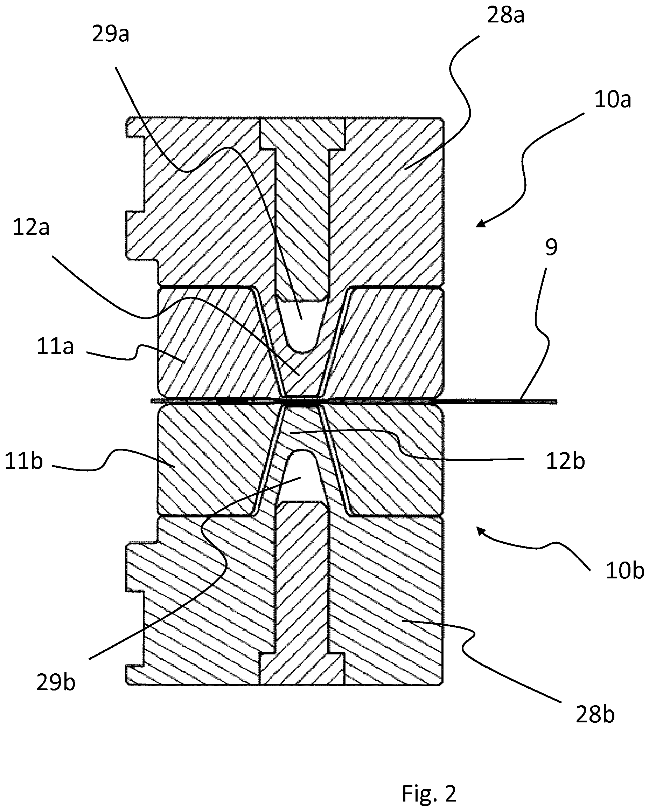

Fig. 2 zeigt in einer schematischen Schnittansicht Teile des Schweißwerkzeugs, mittels dessen die Folien 9 und der Port 5 verschweißt werden. Neben den Schweißbacken 10a und 10b umfasst das Schweißwerkzeug noch die hier nicht dargestellte Mechanik zum Bewegen der Schweißbacken 10a, 10b, eine Kühlmittelzufuhr sowie eine Steuerungselektronik, unter anderem zum Ansteuern des Heizleiters 13.

Um z.B. zwei Folien miteinander zu verschweißen, werden die Schweißbacken 10a und 10b zum Ausbilden einer Schweißnaht 6 auf die Folien 9 aufgedrückt. Jede Schweißbacke 10a, 10b umfasst einen Kühlkörper 12a und 12b und ein Oberteil 11a, 11b. Die Kühlkörper 12a und 12b ragen in das jeweilige Oberteil 11a und 11b hinein. Die genannten Oberteile 11a und 11b umfassen jeweils eine Siegelfläche 17 und werden auf die Folien 9 aufgedrückt. Vorzugsweise sind die beiden Oberteile 11a und 11b, insbesondere deren Siegelfläche 17 und/oder deren Klemmbereiche, metallisch und hart. Sie stellen kein flexibles Gegenlager bereit. Die beiden Oberteile 11a, 11b, insbesondere deren Siegelflächen 17 und Klemmbereich, sind, vorzugsweise im Wesentlichen, symmetrisch aufgebaut.

Das Unterteil 28a, 28b der jeweiligen Schweißbacke 10a, 10b umfasst jeweils einen Kühlkanal 29a, 29b, welcher sich entlang des Kühlkörpers 12a, 12b erstreckt und über welchen der Kühlkörper 12a, 12b durch Hindurchleiten von Kühlflüssigkeit kontinuierlich gekühlt wird. Das Oberteil 11a/11b sitzt auf dem Unterteil 28a/28b auf und wird durch das Unterteil 28a/28b gekühlt.

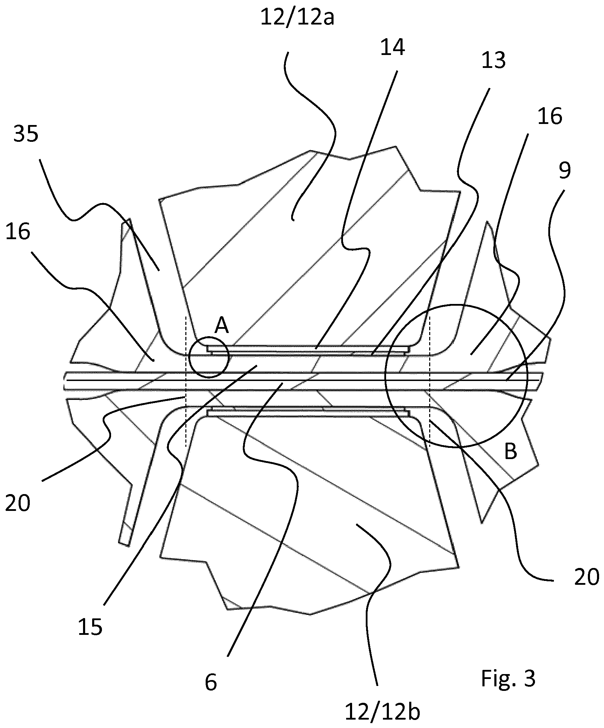

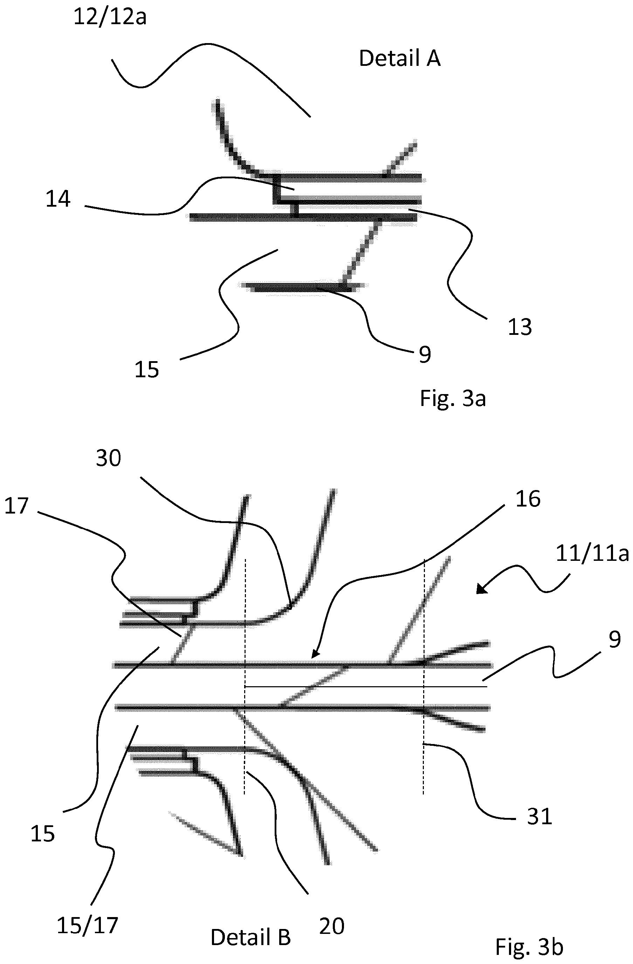

Fig. 3 ist eine Detailansicht der Fig. 2, in welcher zu erkennen ist, dass auf den Kühlkörpern 12a, 12b jeweils ein Heizleiter 13 angeordnet ist. Über den Heizleiter 13 wird eine Membran 15 erwärmt, um das Kunststoffmaterial der Folien 9 zu plastifizieren.

Der Schweißvorgang wird im Impulsbetrieb durchgeführt. Dabei wird der Kühlkörper 12a, 12b kontinuierlich mit einer Flüssigkeit gekühlt und der Heizleiter 13 in Pulsen zeitlich begrenzt beheizt.

Wird nun der Heizleiter 13 von elektrischem Strom durchflossen, so erwärmt sich die Membran 15, die auf den Folien 9 aufliegt, auf eine Temperatur von vorzugsweise 180 °C bis 350 °C und plastifiziert die Folien 9 im Bereich der Schweißnaht 6. Die Folien 9 werden derart plastifiziert oder erweicht, dass zur Ausbildung der Schweißnähte 6, 7 und 8 die Folien 9 miteinander verkleben und/oder die Folien 9 mit dem Port 5 verkleben. Gegebenenfalls kann auch die Oberfläche des Ports 5 etwas erweichen.

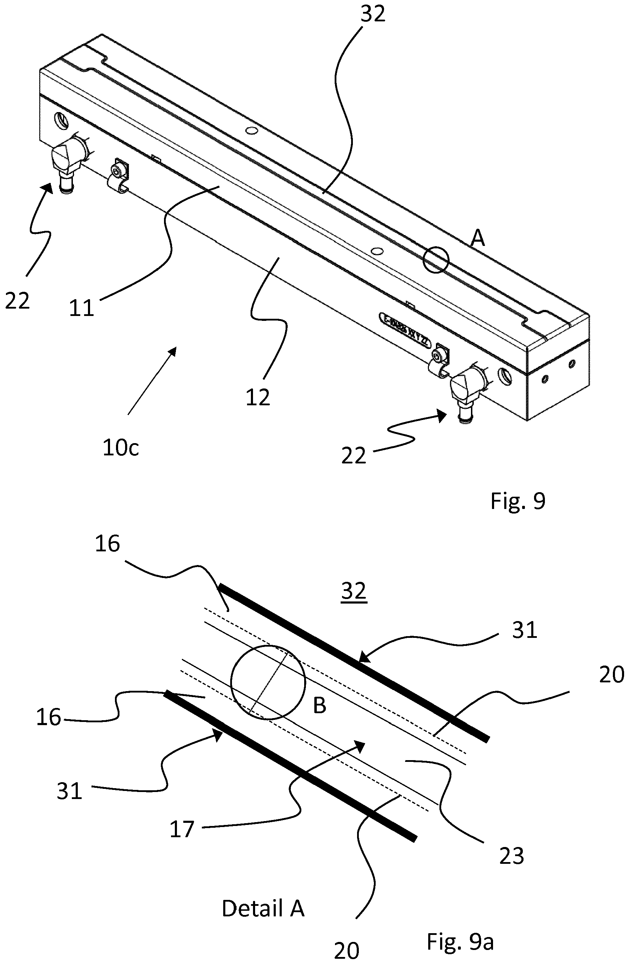

Die Grenzen 20 der hier illustrierten Schweißnaht 6 sind mit den gestrichelten Linien angedeutet. Die Schweißnaht 6 ist breiter als der Heizleiter 13. Vorzugsweise ist der Heizleiter 13 zwischen 10 und 30 %, besonders bevorzugt zwischen 15 und 25 %, schmaler als die Schweißnaht 6. Der Heizleiter 13 ist vorzugsweise zwischen 3 und 6 mm breit. Randseitig der Grenze 20 der Schweißnaht 6 erstreckt sich der Klemmbereich 16. Die Oberfläche der Schweißbacke 10, 10a/10b springt randseitig des Klemmbereichs 16 zurück, da die Siegelfläche 17 und die Klemmbereiche 16 als eine aus der Oberfläche der Schweißbacke hervorstehende Siegelleiste 32 ausgebildet sind (siehe dazu auch Fig. 9 und Fig. 9a).

Die Membran 15 ist vorzugsweise einstückig mit dem restlichen Oberteil 11, 11a, 11b ausgebildet. Der Bereich der Membran 15 umfasst die Siegelfläche 17 der jeweiligen Schweißbacke 10, 10a, 10b, 10c. Vorzugsweise hat die Membran 15 eine Dicke von lediglich 300 - 600 um und wird randseitig von einem massiven Block begrenzt, welche zusammen das jeweilige Oberteil 11a, 11b bilden. Durch ihre geringe Dicke kann sich die Membran 15 beim Einschalten des Heizleiters 13 schnell aufheizen und nach dem Abschalten des Heizleiters 13 aufgrund der permanenten Kühlung wieder schnell abkühlen. Dies ermöglicht ein dynamisches Verfahren. Insbesondere kann sich dadurch der angrenzende Klemmbereich 16 (siehe dazu auch nachfolgend im Text) nicht wesentlich erwärmen.

Die Membran 15 ist beim Erwärmen eingespannt und wölbt sich aufgrund der thermischen Ausdehnung leicht nach vorne, also in Richtung der Folie 9. Hierdurch wird eine größere Kraft pro Fläche und damit ein zusätzlicher Druck auf die Schweißnaht 6 ausgeübt. Dadurch wird das plastifizierte Material komprimiert, was die formschlüssige Verbindung verbessert. Dies führt zudem dazu, dass etwaige Form- und/oder Maßtoleranzen ausgeglichen werden können, indem Material aufgrund des zusätzlichen Drucks in diese Bereiche fließt.

Aufgrund der Kühlung ist der an die Grenze 20 der Schweißnaht 6 angrenzende Klemmbereich 16 der jeweiligen Schweißbacke 10a, 10b derart kalt, dass das Material in diesem Bereich nicht plastifiziert wird.

Die Schweißbacken 10a, 10b liegen so auf den Folien 9 auf und werden aufgrund ihres Aufliegens mit dem angrenzenden Klemmbereich 16, in welchem sich das Kunststoffmaterial nicht verflüssigt und daher nicht verdrängt werden kann, derart auf Abstand gehalten, dass sich im Bereich der Schweißnaht 6 das plastifizierte Material nicht herausdrückt. Während eines Schweißvorgangs wird so innerhalb der Schweißnaht 6 eine geschlossene Kavität gebildet.

Zwischen einem Heizleiter 13 und einem Kühlkörper 12a, 12b ist eine Isolierschicht 14 angeordnet. Beispielsweise sind die Heizleiter 13 mit einer Isolierschicht 14, insbesondere einer Silikonschicht, auf die Kühlkörper 12a, 12b aufgesetzt.

Auf der gegenüberliegenden Seite liegt der Heizleiter 13 unmittelbar an der Membran 15 an, um ein schnelles Aufheizen der Membran 15 sicher zu stellen. Gleichzeitig kann sich die Membran 15 bei Erwärmung aufgrund des anliegenden Heizleiters 13 nur nach vorne, also in Richtung der Folie 9, wölben. Der Heizleiter 13 und/oder die Membran 15 sind mit einer dünnen Isolierschicht (nicht dargestellt) versehen. Diese verhindert, dass die am Heizleiter 13 anliegende Membran 15 den Heizleiter 13 kurzschließt. Hierzu kann die am Heizleiter 13 anliegende Seite der Membran 15 z.B. mit einer isolierenden Oxidschicht oder einer Schicht oder Folie von Polymiden (nicht dargestellt) versehen sein.

Die Seitenwände des Kühlkörpers 12, 12a, 12b sind jeweils durch einen Spalt 35 von der gegenüberliegenden Seitenwand einer Ausnehmung des Oberteils 11a, 11b beabstandet.

Fig. 3a ist eine Detailansicht des Bereiches A der Fig. 3. In diesem Bereich endet der Heizleiter 13. Der Heizleiter 13 ist hier mittels einer Isolierschicht 14, beispielsweise einer Silikonschicht, auf den Kühlkörper 12/12a gesetzt.

Vorzugsweise stellt die Isolierschicht 14 eine stoffschlüssige Verbindung des Heizleiters 13 zum Kühlkörper 12/12a her. Die Isolierschicht 14 wirkt als thermische Isolierschicht. Sie kann auch als elektrische Isolierschicht wirken, so dass insbesondere auf eine weitere elektrische Isolation des Kühlkörpers 12/12a verzichtet werden kann.

Der Kühlkörper 12/12a wird auch während des Schweißverfahrens kontinuierlich gekühlt. Insbesondere aufgrund der Isolierschicht 14 erwärmt sich der im Impulsbetrieb betriebene Heizleiter 13 bei einem Schweißzyklus derart stark auf, dass die Membran 15 in den Grenzen 20 der Schweißnaht 6 derart erwärmt wird, dass sich das Kunststoffmaterial der angrenzenden Folie 9 plastifiziert.

Fig. 3b ist eine Detailansicht des Bereichs B der Fig. 3. Im Bereich, in welchem die Membran 15 sich derart erwärmt, dass das Kunststoffmaterial plastifiziert wird, bildet die Membran 15 die Siegelfläche 17. Die Siegelfläche 17 erstreckt sich bis zur Grenze 20 der Schweißnaht 6. In einem hier abgerundeten Übergangsbereich 30 endet die Membran 15 und geht in das als Block 21 ausgebildete Oberteil 11a/11b über. Der an die Grenze 20 der Schweißnaht 6 angrenzende Klemmbereich 16 beginnt in diesem Ausführungsbeispiel in etwa mit dem Übergangsbereich 30.

Die äußere Grenze 31 des Klemmbereiches 16 ist mit einer Linie gekennzeichnet. In diesem Bereich ragt die Siegelleiste 32, die aus der Siegelfläche 17 und dem Klemmbereich 16 gebildet wird, aus dem Oberteil 11a/11b heraus.

Fig. 4 ist eine teils aufgeschnittene dreidimensionale Ansicht einer Schweißbacke 10, auf die ein Beutel 1 aufgelegt ist. Zum Verschweißen wird, entsprechend der Darstellung gemäß Fig. 2, der Beutel 1 bzw. die Folien 9 mit der zu bildenden

Schweißnaht 6 von einem Schweißwerkzeug eingeklemmt. Die zweite Schweißbacke 10 des Schweißwerkzeugs ist hier nicht dargestellt. Die zweite Schweißbacke kann genauso wie die hier zu sehende Schweißbacke 10 ausgestaltet sein.

Auf der links dargestellten Hälfte ist das Oberteil 11 der Schweißbacke 10 sowie der Beutel 1 ausgeblendet. Der Kühlkörper 12 ragt in das Oberteil 11 hinein und trägt den Heizleiter 13. Der Kühlkörper 12 wird hier mit einer Flüssigkeit, insbesondere mit Wasser, gekühlt.

Die hier dargestellte Schweißbacke 10 ist ausgebildet, um in einem Schweißvorgang auch den Port 2, 3 mit einzuschweißen. Hierzu umfasst die Schweißbacke 10 zumindest eine Ausnehmung 19, die der Aufnahme des Einschweißschiffchens 5 des Ports 2, 3 dient. Ferner ist zumindest ein Halter 18 zum Festlegen des Oberteils eines Ports 2, 3 vorgesehen. Im Bereich der Ausnehmung 19 für das Einschweißschiffchen 5 folgt auch der Heizleiter 13 der Kontur des Einschweißschiffchens 5.

Das Oberteil 11 der Schweißbacke 10 umfasst die Siegelleiste 32. Die Siegelleiste 32 stellt die Siegelfläche 17 und den Klemmbereich 16 bereit. Dazu ragt die Siegelleiste 32 aus dem Oberteil 11 hervor. Sie stellt eine Art Stufe in der Oberseite des Oberteils 11 dar. Die seitlichen Grenzen der Siegelleiste 32 sind durch die Grenzen 31 des Klemmbereichs 16 definiert (siehe dazu auch Fig. 3b).

Die durch den Heizleiter 13 erwärmbare Siegelfläche 17 wird insbesondere durch die Membran 15 bereitgestellt.

Während eines Schweißvorgangs erwärmt sich die Siegelfläche 17, wodurch das Kunststoffmaterial der Folien 9 plastifiziert wird.

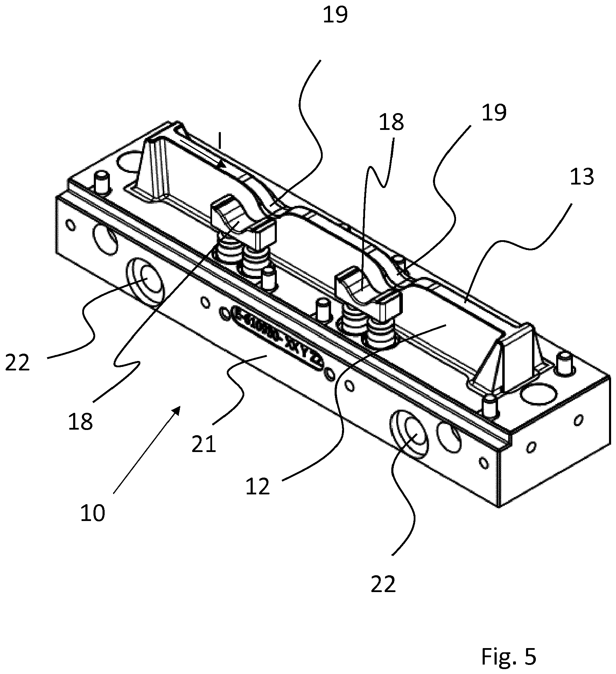

Für einen Schweißvorgang wird der Heizleiter 13 für einige Sekunden, vorzugsweise für weniger als 3 Sekunden, erwärmt. Dabei fließt der Strom I (siehe auch Fig. 5) durch den als Metallstreifen ausgebildeten Heizleiter 13, wodurch sich der Heizleiter 13, trotz der kontinuierlichen Kühlung über den Kühlkörper 12/12a/12b, erwärmt.

Sodann wird die Beheizung ausgeschaltet und das Material kühlt sich, insbesondere aufgrund des Kühlkörpers 12, schnell ab. Vorzugsweise beträgt die Abkühlzeit bis zum Öffnen der Schweißbacken 10a, 10b weniger als 3 Sekunden.

Der an die Siegelfläche 17 angrenzende Klemmbereich 16 der Schweißbacke 10 dient während des Schweißvorgangs als Auflage auf der Folie 9 des Beutels 1 und wird permanent gekühlt.

Fig. 5 ist eine perspektivische Ansicht der Schweißbacke 10 mit vollständig abgenommenem Oberteil 11.

Der Kühlkörper 12 umfasst einen Grundkörper oder Block 21 mit den Kühlmittelanschlüssen 22, aus welchem das Oberteil des Kühlkörpers 12, welches den Heizleiter 13 trägt, hervorragt. Die Ausnehmungen 19 dienen der Aufnahme jeweils eines Einschweißschiffchens 5 eines Ports 2, 3. Die Oberteile eines Ports 2, 3 werden durch die Halter 18 getragen.

Der Kühlkörper 12 besteht vorzugsweise aus einem Material mit guter Wärmeleitfähigkeit, insbesondere aus Aluminium oder Kupfer oder einer Aluminium- oder Kupferlegierung.

Bei dem Heizleiter 13 kann es sich um einen Kupferstreifen handeln. Der Heizleiter 13 kann aber beispielsweise auch ein Metallstreifen einer Eisen-Nickel-Legierung sein, vorzugsweise mit einem thermischen Längenausdehnungskoeffizient α kleiner als 5 * 10⁻⁶/K, besonders bevorzugt kleiner als 2 * 10⁻⁶/K (bei 20°C bis 300 °C).

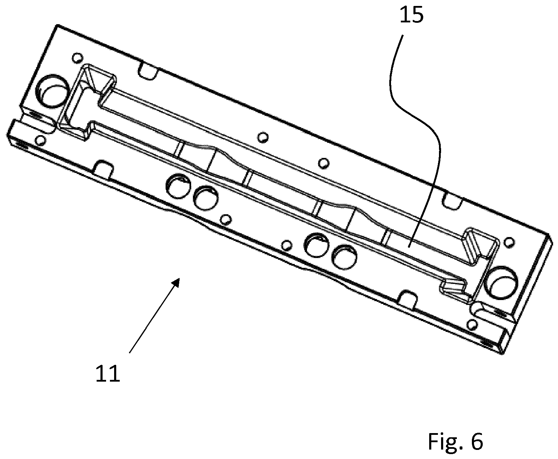

Fig. 6 ist eine perspektivische Innenansicht des Oberteils 11 einer Schweißbacke 10. Zu erkennen ist in dieser Darstellung insbesondere die Membran 15, deren gegenüberliegende Seite die Siegelfläche 17 bildet. Das Oberteil 11 hat einen Graben, in welchen der Kühlkörper 12 hineinragt (siehe dazu auch Fig. 5). Das Oberteil 11 ist hier als massiver Block ausgebildet, in welchem die Membran 15 eingespannt ist. Das Oberteil 11 und die Membran 15 sind vorzugsweise einstückig ausgeführt.

Das Oberteil 11 besteht vorzugsweise aus einem Metall mit niedriger Wärmeausdehnung, insbesondere aus einer Eisen-Nickel-Legierung. Der thermische Längenausdehnungskoeffizient α des Materials beträgt bei einer bevorzugten Ausführungsform der Erfindung bei 20 °C bis 300 °C weniger als 5 * 10⁻⁶/K, besonders bevorzugt weniger als 2 * 10⁻⁶/K.

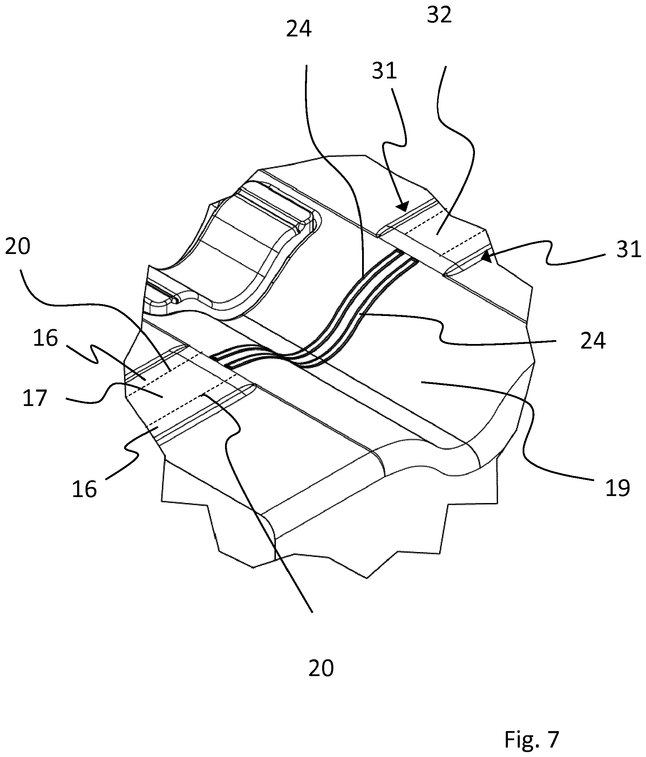

Fig. 7 ist eine perspektivische Detailansicht des Bereichs des Oberteils 11a, 11b, in welchem eine Ausnehmung 19 für das Einschweißschiffchen 5 eines Ports 2, 3 vorhanden ist. Die Ausnehmung 19 ist als grabenförmige quer zur Siegelleiste 32 verlaufende Senke ausgebildet, durch welche sich die Siegelfläche 17 erstreckt, um die Folie 9 mit dem Einschweißschiffchen eines Ports 2, 3 zu verschweißen.

Die Siegelleiste 32 bzw. die Siegelfläche 17 ist hier noch ohne Plateau 23 dargestellt. In der Ausnehmung 19 ragen aus der Siegelfläche 17 zwei voneinander beabstandete Rippen 24 heraus. Die Rippen 24 enden im Wesentlichen in dem Bereich, in welchem die Ausnehmung 19 wieder in eine Ebene übergeht, die die Siegelfläche 17 in dem Bereich bildet, in welchem zwei Folien 9 miteinander verschweißt werden. Die Rippen 24 haben vorzugsweise eine Breite von 0,5 bis 1,5 mm und/oder eine Höhe von 10 - 60 um.

Durch die Rippen 24 kann das Andrücken der Folie 9 an das Einschweißschiffchen 5 verbessert werden. Weiter wird durch die Rippen 24 Material verdrängt, so dass Fertigungstoleranzen der Ports 2, 3 oder der Folie 9 ausgeglichen werden können.

Die Siegelfläche 17, die Grenzen 20 der herzustellenden Schweißnaht 9 sowie der Klemmbereich 16 und seine Grenzen 31 sind hier nur in der Ebene der Siegelfläche 32 illustriert. Die aufgezählten Merkmale sind aus Darstellungsgründen in der Ausnehmung 19 nicht eingezeichnet.

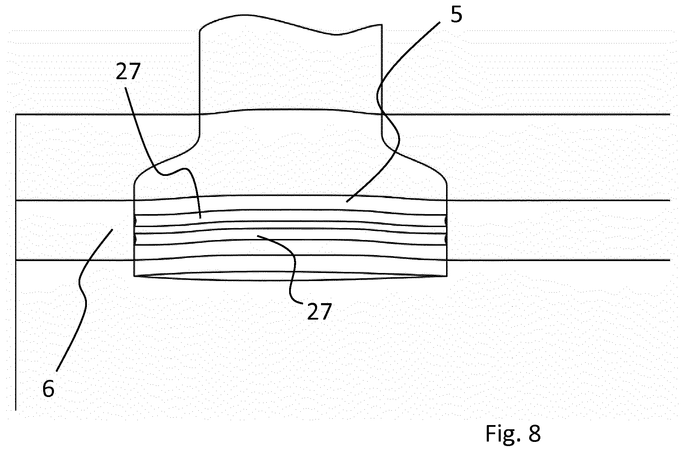

Fig. 8 ist eine Detailansicht des Beutels 1 im Bereich eines Ports 2, 3, von welchem hier das Einschweißschiffchen 5 dargestellt ist. Bei dieser Ausführungsform eines Beutels 1 wurde der Port 2, 3 mit dem zuvor in Fig. 7 dargestellten Werkzeug eingeschweißt. Illustriert ist die Schweißnaht 6, welche sowohl über den Bereich, in dem zwei Folien 9 übereinanderliegen, als auch über das Einschweißschiffchen 5 verläuft.

Im Bereich des Einschweißschiffchens 5 sind zwei Abdrücke 27 vorhanden. Diese entsprechen im Wesentlichen den Rippen 24 der Siegelleiste 32 bzw. der Siegelfläche 17. Die beiden Abdrücke 27 verlaufen hier im Wesentlichen parallel zur Schweißnaht 6 und enden im Bereich der beiden spitz zulaufenden Enden des Einschweißschiffchens 5. Der hieran angrenzende Bereich der Schweißnaht 6 besteht nur aus den aufeinander geschweißten Folien 9.

Fig. 9 zeigt in einer perspektivischen Ansicht eine weitere Ausführungsform einer Schweißbacke 10c, die keine Ausnehmungen 19 zur Aufnahme eines Einschweißschiffchens 5 eines Ports 2, 3 aufweist.

Die hier dargestellte Schweißbacke 10c umfasst also eine Siegelleiste 32 ohne Ausnehmungen 19 und dient insbesondere der Ausbildung der in Fig. 1 dargestellten Schweißnähte 7 und 8. Der prinzipielle Aufbau dieser Schweißbacke 10c entspricht im Wesentlichen dem Aufbau der vorab beschriebenen Schweißbacken 10, 10a und 10b. Die Siegelleiste 32 ragt aus dem hier insbesondere als Block ausgebildeten Oberteil 11 der Schweißbacke hervor.

Fig. 9a ist eine Detailansicht des Bereichs A der Fig. 9, welche die Siegelleiste 32 zeigt.

Die Siegelleiste 32 wird von den Grenzen 31 der Klemmbereiche 16 begrenzt. Die Grenzen 20 der Schweißnaht 6 definieren die Erstreckung der Siegelfläche 17 (siehe dazu auch die Figuren 3, 3a und 3b).

Innerhalb der hier dargestellten Siegelfläche 17 erstreckt sich über die Siegelleiste 32 noch zusätzlich ein Plateau 23, dessen Ausgestaltung und Funktion im Folgenden beschrieben wird.

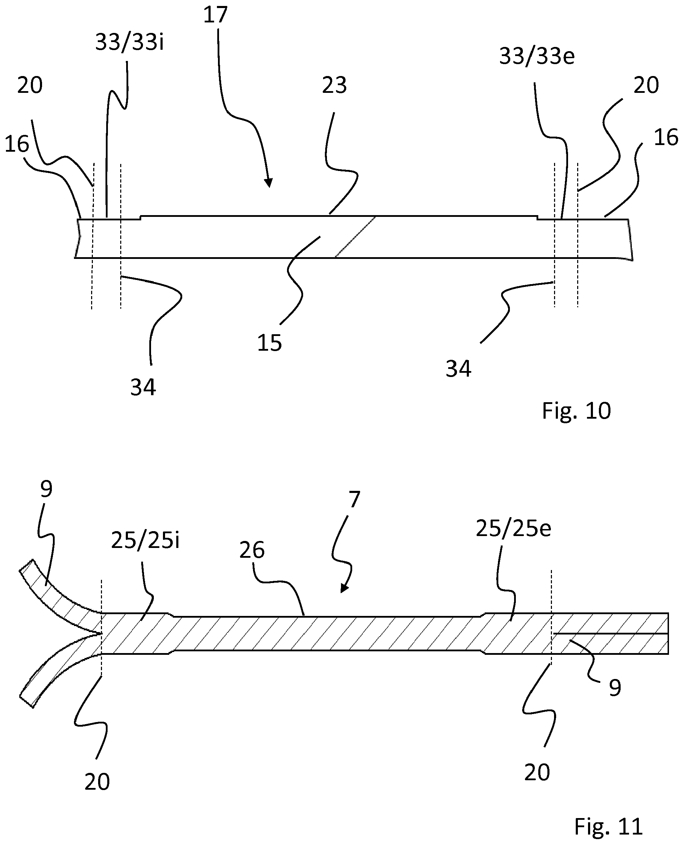

Fig. 10 ist eine Schnittansicht entlang der in Fig. 9a eingezeichneten gestrichelten Linie im Bereich B der Siegelleiste 32. Der Schnitt ist in einer Ebene senkrecht zur Haupterstreckungsrichtung der Siegelleiste 32 ausgeführt.

Dargestellt ist der Querschnitt eines Oberseitenabschnitts der Siegelleiste 32 bzw. der Membran 15, über welchen sich die Siegelfläche 17 erstreckt. Die beiden äußeren Grenzen 31 der Klemmbereiche 16 sind hier nicht dargestellt.

In diesem Ausführungsbeispiel ist die Siegelfläche 17 bzw. die Membran 15 im Bereich der Siegelfläche 17 nicht über die gesamte Breite vollständig eben ausgebildet, sondern umfasst zusätzlich das Plateau 23.

Die Grenzen 20 der Schweißnaht 6, durch die auch der Rand der Siegelfläche 17 definiert ist, verlaufen so, dass das Plateau 23 innerhalb der Schweißnaht 6 liegt. Angrenzend an das Plateau 23 umfasst die Siegelfläche 17 noch die Bereiche 33i und 33e.

Der genannte Bereich 33i ist der randseitige, innere Bereich der Siegelfläche 17. Das ist der Bereich 33i der Siegelfläche 17, der den inneren Bereich 25i der Schweißnaht 6, 7, 8 her- bzw. bereitstellt. Das ist der Bereich 25i der Schweißnaht 6, 7, 8, der an den Innenraum des Beutels 1 angrenzt.

Der Bereich 33e ist dagegen der randseitige, äußere Bereich der Siegelfläche 17. Das ist der Bereich 33e der Siegelfläche 17, der den äußeren (externen) Bereich 25e der Schweißnaht 6, 7, 8 bereitstellt. Das ist der Bereich 25e der Schweißnaht 3, 7, 8, der an den Außenraum des Beutels 1 angrenzt.

Der randseitige, innere Bereich 33i der Siegelfläche 17 und der randseitige, äußere Bereich 33e der Siegelfläche 17 liegen auf einer Höhe oder im Wesentlichen auf einer Höhe mit dem jeweils angrenzenden Klemmbereich 16.

Das Plateau 23 ist in diesem Ausführungsbeispiel insbesondere als plattenförmige Ebene ausgestaltet.

Das Plateau 23 erstreckt sich wie ein Steg oder ein Streifen, vorzugsweise im Wesentlichen zentral, entlang der Haupterstreckungsrichtung der Siegelfläche 17.

Das Plateau 23 ragt über den angrenzenden Klemmbereich 16 der Siegelleiste 32 hinaus. Es ist als eine Art Stufe in der Oberseite der Siegelleiste 32, der Siegelfläche 17 und/oder der Membran 15 ausgeführt.

Im Bereich des Plateaus 23 wird während des Schweißvorgangs dadurch ein zusätzlicher Druck auf die Folie 9 ausgeübt. Der Druck pro Fläche ist also aufgrund des Plateaus 23 in diesem Bereich der Siegelfläche 17 größer als im angrenzenden äußeren Bereich 33 der Siegelfläche 17.

Das Plateau 32 ist schmaler als die gesamte Breite der Siegelfläche 17. Vorzugsweise ist als Plateau auch schmaler als der Heizleiter 13, insbesondere um 0,2 bis 0,8 mm schmaler. Die Grenzen 34 des hier nicht dargestellten Heizleiters 13 sind mit einer gestrichelten Linie markiert. Der Heizleiter 13 selbst ist schmaler als die Schweißnaht 6, da auch seitlich angrenzend zum Heizleiter 13 sich die Membran 15 derart stark erwärmt, dass das Material der Folie 9 bis zur Grenze 20 der Schweißnaht 6 plastifiziert wird.

Die von der äußeren Grenze 31 der Klemmbereiche 16 begrenzte Siegelleiste 32 ist vorzugsweise zwischen 5 und 15 mm, besonders bevorzugt zwischen 6 und 12 mm, breit.

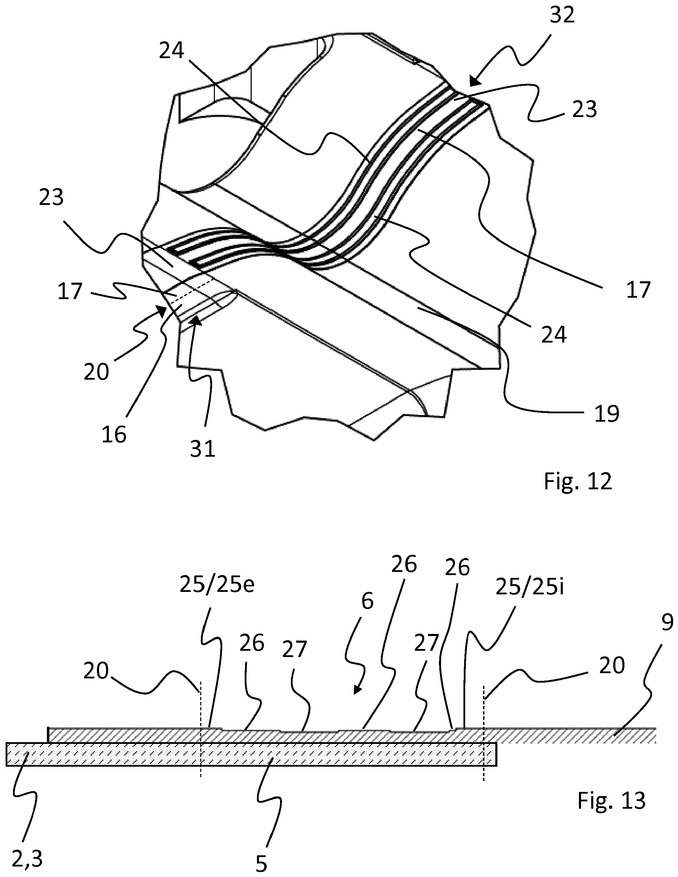

Durch das Plateau 23 wird zum einen die Folie 9 im Bereich der Schweißnaht 7 stärker angedrückt. Zum anderen kann das aufgeschmolzene, schmelzflüssige Kunststoffmaterial in mögliche Kavitäten, die aufgrund von Form- und/oder Maßtoleranzen vorhanden sein können, einfließen, da es aufgrund des höheren Drucks verdrängt wird (siehe dazu auch Fig. 12).

In einer bevorzugten Ausgestaltung hat das Plateau 23 eine Höhe von unter 100 µm, vorzugsweise von unter 60 µm. Dadurch besteht nicht die Gefahr, dass größere Mengen schmelzflüssigen Kunststoffs in den angrenzenden Klemmbereich 16 hineingedrückt werden. Der angrenzende gekühlte Klemmbereich 16 ist ohnehin aufgrund der anliegenden Folie 9 verschlossen.

Dadurch, dass die Membran 15 insgesamt sehr dünn ist, ist diese elastisch und kann ihrerseits wiederum einem Druck in dem Volumen, welches durch den schmelzflüssigen Kunststoff gebildet wird, ausweichen.

Fig. 11 zeigt die Schnittansicht einer Schweißnaht 7 eines Beutels 1, welcher mit dem in Fig. 9, 9a und 10 dargestellten Schweißwerkzeug hergestellt wurde, in dem Bereich, in welchem zwei Folien 9 miteinander verschweißt sind (siehe dazu den Schnitt S_{F/F} in Fig. 1). Auf der hier links dargestellten Seite grenzt die Schweißnaht 7 an den eingeschlossenen Innenraum des Beutels 1 an. Auf der hier rechts dargestellten Seite grenzt die Schweißnaht 7 an den externen Raum bzw. die Umgebung des Beutels 1 an. Links und rechts der Grenzen 20 der Schweißnaht 7 sind die beiden Folien 9 nicht miteinander verschweißt.

Die Kontur bzw. das Profil der Schweißnaht 7 ist ein Abdruck der in Fig. 10 dargestellten Kontur bzw. des Profils der Siegelfläche 17.

In dem mittigen Teil der Schweißnaht 7 ist ein ausgedünnter Bereich 26 vorhanden, an welchen nicht ausgedünnte Nachbarbereiche 25 angrenzen. Der ausgedünnte Bereich 26 stellt den Abdruck des Plateaus 23 dar. Der an den Innenraum des Beutels 1 angrenzende Schweißnahtbereich 25i (hier links dargestellt) und der an die (externe) Umgebung des Beutels 1 angrenzende Schweißnahtbereich 25e (hier rechts dargestellt) besitzen eine größere Dicke als der ausgedünnte Bereich 25. Der randseitige innere Bereich 25i der Schweißnaht 7 besitzt insbesondere eine Dicke, welche im Wesentlichen der Gesamtdicke der beiden Folien 9 entspricht. Die größere Dicke der Schweißnaht 7 in dem an den Innenraum angrenzenden Bereich 25i hat sich als äußerst vorteilhaft für die Stabilität der Schweißnaht 9 erwiesen. Der randseitige äußere Bereich 25e der Schweißnaht 7 kann, wie hier dargestellt, auch eine Dicke besitzen, die im Wesentlichen der Gesamtdicke der beiden Folien 9 entspricht.

Fig. 12 zeigt eine perspektivische Ansicht eines weiteren Ausführungsbeispiels, bei dem entsprechend der Darstellung gemäß Fig. 7 der Bereich der Siegelfläche 17 im Bereich der Ausnehmung 19 für ein Einschweißschiffchen 5 dargestellt ist. Die Siegelfläche 17, ihre Grenzen 20 sowie der Klemmbereich 16 und seine Grenzen 31 sind hier nur zum Teil illustriert.

Bei dieser Ausführungsform der Erfindung umfasst die Siegelfläche 17 entsprechend der in Fig. 10 dargestellten Ausführungsform das Plateau 23, welches sich sowohl über den Bereich der Ausnehmung 19 als auch über die übrige ebene Siegelfläche 17 bzw. Siegelleiste 32 erstreckt. Auf dem Plateau 23 sind zusätzlich zwei Rippen 24 aufgebracht (siehe dazu auch Fig. 7).

Fig. 13 ist eine schematische Schnittansicht einer Folie 9, welche in einem Schweißverfahren verarbeitet wurde, bei dem das in Fig. 12 dargestellte Schweißwerkzeug verwendet wurde (siehe dazu den Schnitt S_{P/F} in Fig. 1). Dargestellt ist die Schweißnaht 6 im Bereich des Einschweißschiffchens 5 (nur schematisch angedeutet). Auf der hier rechts dargestellten Seite grenzt die Schweißnaht 6 an den eingeschlossenen Innenraum des Beutels 1 an. Auf der hier links dargestellten Seite grenzt die Schweißnaht 7 an den externen Raum bzw. die Umgebung des Beutels 1 an.

Die Schweißnaht 6 weist innerhalb ihrer Grenzen 20 einen ausgedünnten Bereich 26 auf, welcher aufgrund des Abdrucks des Plateaus 23 vorhanden ist.

Der ausgedünnte Bereich 26 liegt zentral, vorzugsweise in etwa mittig, in der Schweißnaht 6. Angrenzend zum ausgedünnten Bereich 26 ist jeweils ein Nachbarbereich 25 bzw. 25i und 25e vorhanden, in welchem die Folie 9 im Wesentlichen nicht ausgedünnt ist. Auch in diesem Bereich 25 ist die Folie 9 mit dem Port 2,3 bzw. mit seinem Einschweißschiffchen 5 verschweißt bzw. verbunden. Im Bereich 25 hat die Folie 9 aber im Wesentlichen dieselbe Dicke wie im angrenzenden Bereich, in welchem die Folie 9 nicht mit dem Einschweißschiffchen 5 verschweißt ist. Die größere Dicke in dem inneren Randbereich 25i der Schweißnaht 6 hat sich dabei als vorteilhaft für die Stabilität der Schweißnaht 6 insgesamt erwiesen.

Weiter sind innerhalb des ausgedünnten Bereichs 26 noch zwei Abdrücke 27 vorhanden, welche von den Rippen 24 eingebracht wurden.

Die Schweißnaht 6 entspricht außerhalb des gezeigten Bereichs des Einschweißschiffchens 5 dagegen der Darstellung in Fig. 11.

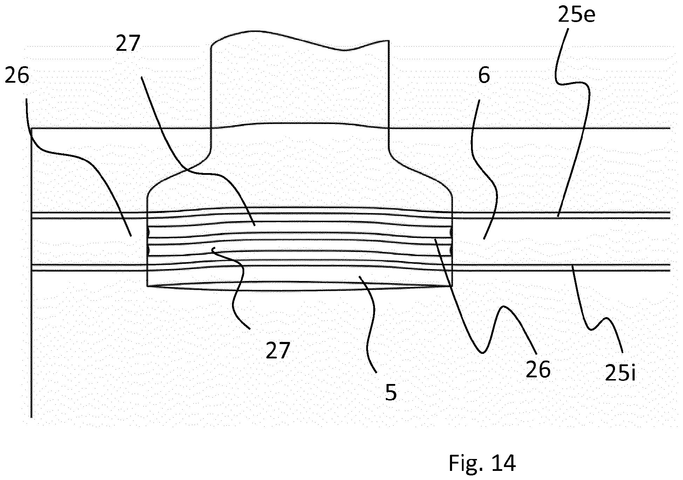

Fig. 14 ist eine Detailansicht des Beutels 1 im Bereich eines Ports 2, 3, von welchem das Einschweißschiffchen 5 dargestellt ist. Bei dieser Ausführungsform eines Beutels 1 wurde der Port 2, 3 mit dem zuvor in Fig. 12 dargestellten Werkzeug in den Beutel 1 eingeschweißt. Illustriert ist hier die Schweißnaht 6, die sich über den Bereich, in dem zwei Folien 9 verbunden sind, und über den Bereich, in dem die Folien 9 mit dem Port 2, 3 bzw. mit seinem Einschweißschiffchen 5 verbunden sind, erstreckt. Zu erkennen sind der ausgedünnte Bereich 26 sowie die beiden nicht ausgedünnten randseitigen inneren Bereiche 25i und äußeren Bereiche 25i in der Schweißnaht 6, die sich über die gesamte Länge der Schweißnaht 6 erstrecken. Dieser ausgedünnte Bereich 26 in der Schweißnaht 6 ist der Abdruck des vorab beschriebenen Plateaus 23. Im Bereich des Einschweißschiffchens 5 sind zudem zwei Abdrücke 27 vorhanden. Diese entsprechen im Wesentlichen den Rippen 24 der Siegelleiste 32 bzw. der Siegelfläche 17 (siehe hierzu die Beschreibung zu Figur 8).

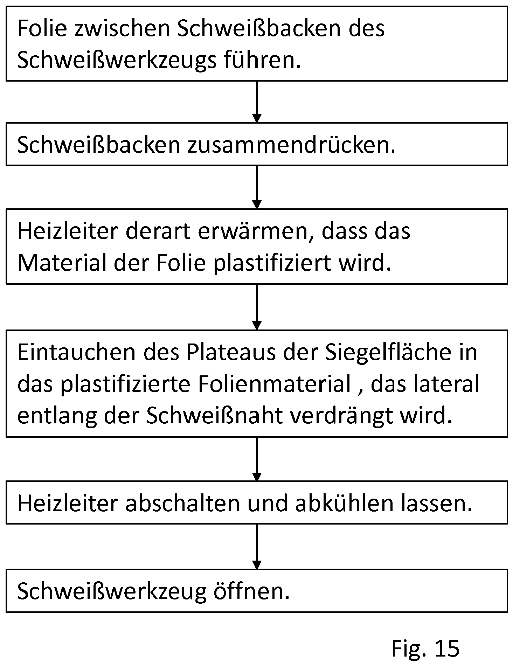

Fig. 15 ist ein Flussbild der Verfahrensschritte eines Ausführungsbeispiels eines erfindungsgemäßen Schweißverfahrens.

Das Schweißverfahren ist als nicht kontinuierliches Impulsverfahren, insbesondere mit permanenter Kühlung, ausgeführt.

Zunächst wird die Folie 9 zwischen die Schweißbacken 10, 10a, 10b, 10c des Schweißwerkzeugs zugeführt.

Sodann werden die beiden Schweißbacken 10, 10a, 10b, 10c zusammengedrückt bzw. geschlossen. Der geschlossene Zustand wird zunächst durch den Anschlag der Plateaus 23 definiert. Die Plateaus dienen als eine Art Abstandshalter. Vorzugsweise kommen in diesem Zustand die Klemmbereiche 16 der oberen und der unteren Schweißbacke 10, 10a, 10b, 10c noch nicht zum Anschlag.

Der jeweilige Heizleiter 13 wird erwärmt. Die Siegelflächen 17 werden durch den Heizleiter 13 erwärmt. Die Erwärmung ist derart, dass die Folien 9 in dem Bereich der Siegelflächen 17 plastifiziert werden. Die Plateaus 23 können in das nun fließfähige Folienmaterial eintauchen. Die Schweißbacken 10, 10a, 10b, 10c schließen dadurch vollständig. Die Klemmbereiche 16 liegen nun, getrennt von den Folien 9, aneinander. Die Klemmbereiche 16 sind derart kühl oder gekühlt, dass die Folien 9 dort nicht plastifiziert sind. Es wird dadurch ein abgeschlossenere Raum gebildet.

Durch das Eintauchen der Plateaus 23 in die plastifizierten Folien 9 wird flüssiges Folienmaterial gezielt verdrängt. Das Folienmaterial wird insbesondere zumindest lateral entlang der Schweißnaht 6, 7, 8 verdrängt. Das verdrängte Folienmaterial kann etwaige Form- und/oder Maßtoleranzen in den Folien 9 und/oder in den Ports 5 ausgleichen bzw. diese auffüllen. In dem inneren Randbereich 25i der Schweißnaht 6, 7, 8 bleibt dagegen die Folienstärke erhalten.

Die Membran 15 der Schweißbacken 10, 10a, 10b, 10c kann sich aufwölben und zusätzlich Druck auf die Schweißnaht 6, 7, 8 ausüben. Gemäß einer anderen Ausführungsform der Erfindung kann der Heizleiter 13 auch bereits erwärmt werden, bevor die Schweißbacken, 10, 10a, 10b, 10c zusammengedrückt werden.

Sodann wird die Stromzufuhr zum Heizleiter 13 abgeschaltet und die Schweißnaht 6 kühlt unter anderem aufgrund der vorzugsweise ständig laufenden Kühlmittelzufuhr ab, so dass das Schweißwerkzeug geöffnet werden kann, wenn sich das Material der Folien 9 wieder hinreichend verfestigt hat.

Insgesamt gesehen kann das erfindungsgemäße Verfahren mit einer Kombination aus Nahtschweißen und Spritzgießen verglichen werden. Es wird nämlich durch das Einklemmen der Folie 9 ein abgeschlossener Bereich gebildet, in welchem das Material während des Schweißvorgangs schmelzflüssig ist. Über eine Anpassung der Kontur der Siegelfläche 17 der Schweißbacke in diesem Bereich ist es dabei möglich, gezielt die Kontur der Schweißnaht 9 zu verändern

Durch die Erfindung konnte die Anfälligkeit eines Impulsschweißverfahrens zum Verschweißen von Kunststofffolien gegenüber Form- und Maßtoleranzen, insbesondere gegenüber Form- und Maßtoleranzen eines einzuschweißenden Ports, signifikant reduziert werden.

### Bezugszeichenliste

1 Beutel
2 Port
3 Port
4 Hänger
5 Einschweißabschnitt oder Einschweißschiffchen
6 Schweißnaht (Querschweißnaht)
7 Schweißnaht (Längsschweißnaht)
8 Schweißnaht (Querschweißnaht mit Hänger)
9 Folie
10, 10a, 10b, 10c Schweißbacke
11, 11a, 11b Oberteil
12, 12a, 12b Kühlkörper
13 Heizleiter
14 Isolierschicht
15 Membran
16 Klemmbereich
17 Siegelfläche
18 Halter
19 Ausnehmung
20 Grenze der Schweißnaht
21 Block
22 Kühlmittelanschluss
23 Plateau
24 Rippe
25 Nachbarbereich zum ausgedünnten Bereich
25i Randseitiger, innerer Bereich der Schweißnaht (angrenzend an den Innenraum des Beutels)
25e Randseitiger, äußerer Bereich der Schweißnaht (angrenzend an die externe Umgebung des Beutels)
26 In der Dicke reduzierter oder ausgedünnter Bereich in der Schweißnaht
27 Abdruck der Rippe in der Schweißnaht
28a, 28b Unterteil
29a, 29b Kühlkanal
30 Übergangsbereich (der Membran)
31 Grenze des Klemmbereichs
32 Siegelleiste
33 Äußerer Bereich der Siegelfläche
33i Randseitiger, innerer Bereich der Siegelfläche
33e Randseitiger, äußerer Bereich der Siegelfläche
34 Grenze des Heizleiters
35 Spalt zwischen Kühlkörper und Oberteil

## Patentansprüche

1. Schweißwerkzeug zum Impulsschweißen einer Folie (9) aus Kunststoff einer, vorzugsweise medizinischen, Verpackung (1), umfassend
eine Schweißbacke (10) mit einer sich entlang der Schweißbacke (10) erstreckenden, auf die Folie (9) aufdrückbaren Siegelleiste (32),
wobei die Siegelleiste (32) zur Ausbildung einer Schweißnaht (6, 7, 8) eine erwärmbare Siegelfläche (17) umfasst, um an die Siegelfläche (17) angrenzendes Kunststoffmaterial der Folie (9) zu plastifizieren, und randseitig zu der Siegelfläche (17) einen angrenzenden, inneren Klemmbereich (16) und einen angrenzenden, äußeren Klemmbereich (16) zum Einklemmen der Folie (9) während eines Verschweißens der Folie (9) aufweist,
wobei die Siegelfläche (17) eine Erhöhung (23) zum Verschieben von plastifiziertem Kunststoffmaterial der Folie (9) aufweist, **dadurch gekennzeichnet, dass** die Erhöhung (23) durch ein Plateau (23) bereitgestellt wird, welches aus einer Oberfläche der Siegelfläche (17) hervorragt.

2. Schweißwerkzeug nach dem vorstehenden Anspruch, **dadurch gekennzeichnet, dass** ein randseitiger, innerer Bereich (33i) der Siegelfläche (17) vertieft gegenüber der Erhöhung (23) angeordnet ist und/oder
dass die Erhöhung (23) in der Siegelfläche (17) im Wesentlichen mittig angeordnet ist.

3. Schweißwerkzeug nach einem der vorstehenden Ansprüche, **dadurch gekennzeichnet, dass** der innere Klemmbereich (16) und/oder der äußere Klemmbereich (16) während des Verschweißens mit einer Temperatur bereitgestellt wird bzw. werden, die unterhalb der Plastifizierungstemperatur der zu verschweißenden Folie (9) liegt.

4. Schweißwerkzeug nach einem der vorstehenden Ansprüche, **dadurch gekennzeichnet, dass** der randseitige, innere Bereich (33i) der Siegelfläche (17) und/oder der randseitige, äußere Bereich (33e) der Siegelfläche (17) im Wesentlichen auf einer Höhe mit dem jeweiligen angrenzenden Klemmbereich (16) liegt bzw. liegen.

5. Schweißwerkzeug nach einem der vorstehenden Ansprüche, umfassend
einen Kühlkörper (12), auf welchen ein elektrischer Heizleiter (13) aufgesetzt ist, wobei auf den Kühlkörper (12) ein Oberteil (11) mit der Siegelleiste (32) aufgesetzt ist und/oder
eine sich aufwölbende Membran (15), wobei die Membran (15) die Siegelfläche (17) umfasst.

6. Schweißwerkzeug nach einem der vorstehenden Ansprüche, **dadurch gekennzeichnet, dass** das Oberteil (11) des Schweißwerkzeugs zumindest eine Ausnehmung (19) aufweist, die zur Aufnahme eines Einschweißabschnitts (5) eines Ports (3,4) ausgebildet ist,

7. Schweißwerkzeug nach einem der vorstehenden Ansprüche, **dadurch gekennzeichnet, dass** die Siegelfläche (17) im Bereich des einzuschweißenden Ports (2, 3), insbesondere im Bereich des Einschweißabschnitts (5) eines Ports (2,3), zumindest eine hervorstehende Rippe (24), vorzugsweise zwei hervorstehende Rippen (24), umfasst und/oder dass das Schweißwerkzeug derart ausgebildet ist, dass die Siegelfläche (17) im Bereich der Ausnehmung (19) für den Einschweißabschnitt (5) stärker erwärmbar ist als in einem angrenzenden Bereich der Siegelfläche (17), in dem zwei Folien (9) miteinander verschweißt werden.

8. Schweißwerkzeug nach einem der vorstehenden Ansprüche, **dadurch gekennzeichnet,**
**dass** das Plateau (23) als eine streifenförmige Kontur auf der Siegelfläche (17) bereitgestellt wird und/oder
**dass** das Plateau (23) 30 bis 80 %, vorzugsweise 60 bis 75 %, der Breite der Schweißnaht (6, 7, 8) einnimmt und/oder
**dass** das Plateau (23) mit einer Höhe zwischen 10 und 100 um, vorzugsweise zwischen 20 und 60 um, bereitgestellt wird.

9. Verwendung eines Schweißwerkzeugs nach einem der vorstehenden Ansprüche 1 bis 8 zur Herstellung einer als Beutel (1) ausgebildeten medizinischen Verpackung.

10. Impulsschweißverfahren mit einem Schweißwerkzeug zum Impulsschweißen einer Folie (9) aus Kunststoff einer, vorzugsweise medizinischen, Verpackung nach einem der vorstehenden Ansprüche 1 bis 8, wobei
eine Schweißbacke (10) des Schweißwerkzeugs mit einer erwärmbaren Siegelfläche (17) zur Ausbildung einer Schweißnaht (6, 7, 8) so auf die Folie (9) gepresst wird, **dadurch gekennzeichnet dass**
in dem Schweißwerkzeug während des Verschweißens eine Kavität gebildet wird, indem die Folie (9) randseitig zu der Siegelfläche (17) während des Schweißvorgangs durch einen gegenüber der Siegelfläche (17) kühleren, randseitig an die Siegelfläche (17) erstreckenden Klemmbereich (16) eingeklemmt ist und
plastifiziertes Kunststoffmaterial der Folie (9) durch eine Erhöhung der Siegelleiste (17), vorzugsweise zumindest lateral, entlang der Schweißnaht (6, 7, 8) zum Ausgleich von Form- und/oder Maßtoleranzen verschoben wird, wobei die Folienstärke in einem randseitigen inneren Bereich (25i) der Schweißnaht (6, 7, 8) im Wesentlichen erhalten bleibt.

11. Verfahren nach vorstehendem Anspruch, **dadurch gekennzeichnet,**
**dass** sowohl von der Siegelfläche (17) als auch von dem sich randseitig an die Siegelfläche (17) erstreckenden Klemmbereich (16) durch eine Flächenpressung eine Kraft auf die Folie (9) ausgeübt wird und/oder
**dass** bei einem Erwärmen der Siegelfläche (17) im Bereich der Siegelfläche (17) eine höhere Flächenpressung ausgeübt wird als in dem Klemmbereich (16).

12. Verfahren nach einem der vorstehenden Ansprüche 10 oder 11, **dadurch gekennzeichnet, dass** das plastifizierte Kunststoffmaterial durch die Erhöhung der Siegelleiste (17) in einen randseitigen, inneren Bereich (25i) der Schweißnaht (6, 7, 8) und insbesondere in einen randseitigen, äußeren Bereich (25e) der Schweißnaht (6, 7, 8), verschoben wird und/oder
dass die Erhöhung der Siegelfläche (17) durch eine Erhöhung (23), vorzugsweise durch ein Plateau (23), bereitgestellt wird, welche aus einer Oberfläche der Siegelfläche (17) hervorragt und/oder dass die Erhöhung der Siegelfläche (17) durch eine sich aufwölbende Membran (15) bereitgestellt wird, wobei die Membran (15) die Siegelfläche (17) umfasst.

13. Als Beutel (1) ausgebildete medizinische Verpackung, der miteinander verschweißte Folien (9) umfasst,
herstellbar mit einem Verfahren und/oder mit einem Schweißwerkzeug nach einem der vorstehenden Ansprüche,
wobei der Beutel (1) zumindest eine Schweißnaht (6, 7, 8) umfasst, welche zumindest abschnittsweise einen gegenüber einem angrenzenden Nachbarbereich (25, 25i, 25e) der Schweißnaht (6, 7, 8) in der Dicke reduzierten Bereich (26) aufweist,
wobei der Nachbarbereich (25) durch einen randseitigen, inneren Bereich (25i) der Schweißnaht (6, 7, 8) bereitgestellt wird,
**dadurch gekennzeichnet, dass** der randseitige, innere Bereich (25i) der Schweißnaht (6, 7, 8) eine Dicke aufweist, welche einer Gesamtdicke der Folien (9) entspricht, die um höchstens ± 10 % abweicht.

14. Als Beutel (1) ausgebildete medizinische Verpackung nach vorstehenden Anspruch 13, **gekennzeichnet durch** einen in die Schweißnaht (6) über einen Einschweißabschnitt (5) eingeschweißten Port (2,3), wobei der randseitige, innere Bereich (25i) der Schweißnaht (6, 7, 8) dort eine Dicke aufweist, welche einer Dicke der Folie (9) entspricht, die um höchstens ± 10 % abweicht.

15. Als Beutel (1) ausgebildete medizinische Verpackung nach einem der vorstehenden Ansprüche 13 bis 14, **dadurch gekennzeichnet, dass** der Nachbarbereich (25) durch einen randseitigen, äußeren Bereich (25e) der Schweißnaht (6, 7, 8) bereitgestellt wird und der randseitige, äußeren Bereich (25e) der Schweißnaht (6, 7, 8) insbesondere eine Dicke aufweist, welche im Wesentlichen einer Dicke der Folie (9) oder einer Gesamtdicke der Folien (9) entspricht und/oder
dass der in der Dicke reduzierte Bereich (26) sich streifenförmig entlang einer Region der Schweißnaht (6, 7, 8) erstreckt.

16. Als Beutel (1) ausgebildete medizinische Verpackung nach einem der vorstehenden Ansprüche 13 oder 15, **dadurch gekennzeichnet,**
**dass** die Dicke der Folie (9) in dem in der Dicke reduzierten Bereich (26) gegenüber dem angrenzenden Nachbarbereich (25) um zumindest 10 %, vorzugsweise um 10 bis 30%, reduziert ist und/oder
**dass** der in der Dicke reduzierte Bereich (26) 30 % bis 80 %, vorzugsweise 60 % bis 75 %, der Breite der Schweißnaht (6, 7, 8) einnimmt.

17. Als Beutel (1) ausgebildete medizinische Verpackung nach einem der vorstehenden Ansprüche 14 bis 16, **dadurch gekennzeichnet, dass** im Bereich des Einschweißabschnitts (5) des Ports (2,3) zumindest ein Abdruck (27) einer Rippe (24) vorhanden ist, vorzugsweise zwei Abdrücke (27) zweier Rippen (24), in der Folie (9) vorhanden sind.

18. Pharmazeutisches Produkt umfassend eine als Beutel (1) ausgebildete medizinische Verpackung nach einem der vorstehenden Ansprüche 13 bis 17, wobei der Beutel (1) mit einer, vorzugsweise einen Wirkstoff enthaltenen, medizinischen Flüssigkeit befüllt ist.

## Claims

1. A welding tool for pulse welding a film (9) of plastic of a, preferably medical, package (1), comprising
a welding jaw (10) with a sealing strip (32) which extends along the welding jaw (10) and can be pressed onto the film (9),
wherein the sealing strip (32) comprises a heatable sealing surface (17) to form a weld seam (6, 7, 8) in order to plasticize plastic material of the film (9) adjoining the sealing surface (17), and on the edge in relation to the sealing surface (17) has an adjoining, inner clamping region (16) and an adjoining, outer clamping region (16) for clamping the film (9) while the film (9) is welded,
wherein the sealing surface (17) has an elevation (23) for displacing plasticized plastic material of the film (9), **characterized in that** the elevation (23) is provided by a plateau (23) which protrudes from a top surface of the sealing surface (17).

2. The welding tool according to the preceding claim, **characterized in that** an edge-side, inner region (33i) of the sealing surface (17) is arranged recessed relative to the elevation (23) and/or
**in that** the elevation (23) is arranged substantially centrally in the sealing surface (17).

3. The welding tool according to one of the preceding claims, **characterized in that** the inner clamping region (16) and/or the outer clamping region (16) is or are provided during welding at a temperature which is below the plasticization temperature of the film (9) to be welded.

4. The welding tool according to one of the preceding claims, **characterized in that** the edge-side, inner region (33i) of the sealing surface (17) and/or the edge-side, outer region (33e) of the sealing surface (17) is or are substantially at a height of the respective adjoining clamping region (16).

5. The welding tool according to one of the preceding claims, comprising
a cooling element (12), on which an electrical heating conductor (13) is placed, wherein an upper part (11) with the sealing strip (32) is placed on the cooling element (12) and/or
a bulging membrane (15), wherein the membrane (15) comprises the sealing surface (17).

6. The welding tool according to one of the preceding claims, **characterized in that** the upper part (11) of the welding tool has at least one recess (19) which is designed to receive a welded-in section (5) of a port (3, 4).

7. The welding tool according to one of the preceding claims, **characterized in that** the sealing surface (17) in the region of the port (2, 3) to be welded in, in particular in the region of the welded-in section (5) of a port (2, 3), comprises at least one protruding rib (24), preferably two protruding ribs (24), and/or **in that** the welding tool is designed in such manner that the sealing surface (17) can be heated to a greater extent in the region of the recess (19) for the welded-in section (5) than in an adjoining region of the sealing surface (17), in which two films (9) are welded together.

8. The welding tool according to one of the preceding claims, **characterized**
**in that** the plateau (23) is provided as a strip-shaped contour on the sealing surface (17) and/or
**in that** the plateau (23) occupies 30 to 80%, preferably 60 to 75%, of the width of the weld seam (6, 7, 8) and/or
**in that** the plateau (23) is provided with a height of between 10 and 100 µm, preferably between 20 and 60 µm.

9. A use of a welding tool according to one of the preceding claims 1 to 8 for producing a medical package designed as a bag (1).

10. A pulse welding method with a welding tool for pulse welding a film (9) of plastic of a, preferably medical, package according to one of the preceding claims 1 to 8, wherein
a welding jaw (10) of the welding tool with a heatable sealing surface (17) is pressed onto the film (9) to form a weld seam (6, 7, 8), **characterized in that**
a cavity is formed in the welding tool during welding by clamping the film (9) on the edge of the sealing surface (17) during the welding process by way of a clamping region (16) which is cooler than the sealing surface (17) and extends on the edge of the sealing surface (17) and
plasticized plastic material of the film (9) is displaced by an elevation of the sealing strip (17), preferably at least laterally, along the weld seam (6, 7, 8) to compensate for shape and/or dimensional tolerances, wherein the film thickness is substantially retained in an edge-side inner region (25i) of the weld seam (6, 7, 8).

11. The method according to the preceding claim, **characterized**
**in that** a force is exerted on the film (9) by a surface pressure both from the sealing surface (17) and from the clamping region (16) extending on the edge of the sealing surface (17) and/or
**in that** when the sealing surface (17) is heated, a higher surface pressure is exerted in the region of the sealing surface (17) than in the clamping region (16).

12. The method according to one of the preceding claims 10 or 11,
**characterized in that** the plasticized plastic material is pushed into an edge-side, inner region (25i) of the weld seam (6, 7, 8) and in particular into an edge-side, outer region (25e) of the weld seam (6, 7, 8) by the elevation of the sealing strip (17), and/or
**in that** the elevation of the sealing surface (17) is provided by an elevation (23), preferably by a plateau (23), which protrudes from a top surface of the sealing surface (17) and/or **in that** the elevation of the sealing surface (17) is provided by a bulging membrane (15), wherein the membrane (15) comprises the sealing surface (17).

13. A medical package designed as a bag (1), which comprises films (9) welded together,
can be produced using a method and/or using a welding tool according to one of the preceding claims,
wherein the bag (1) comprises at least one weld seam (6, 7, 8), which at least in sections has a region (26) reduced in thickness compared to an adjoining neighboring region (25, 25i, 25e) of the weld seam (6, 7, 8),
wherein the neighboring region (25) is provided by an edge-side, inner region (25i) of the weld seam (6, 7, 8),
**characterized in that** the edge-side, inner region (25i) of the weld seam (6, 7, 8) has a thickness which corresponds to a total thickness of the films (9) which deviates by a maximum of ± 10%.

14. The medical package designed as a bag (1) according to the preceding claim 13, **characterized by** a port (2, 3) welded into the weld seam (6) via a welded-in section (5), wherein the edge-side, inner region (25i) of the weld seam (6, 7, 8) there has a thickness which corresponds to a thickness of the film (9) which deviates by a maximum of ± 10%.

15. The medical package designed as a bag (1) according to one of the preceding claims 13 to 14, **characterized in that** the neighboring region (25) is provided by an edge-side, outer region (25e) of the weld seam (6, 7, 8) and the edge-side, outer region (25e) of the weld seam (6, 7, 8) in particular has a thickness which substantially corresponds to a thickness of the film (9) or a total thickness of the films (9) and/or
**in that** the region (26) reduced in thickness extends in the shape of a strip along a region of the weld seam (6, 7, 8).

16. The medical package designed as a bag (1) according to one of the preceding claims 13 or 15, **characterized**
**in that** the thickness of the film (9) in the region (26) reduced in thickness is reduced by at least 10%, preferably by 10 to 30%, compared to the adjoining neighboring region (25) and/or
**in that** the region (26) reduced in thickness occupies 30% to 80%, preferably 60% to 75%, of the width of the weld seam (6, 7, 8).

17. The medical package designed as a bag (1) according to one of the preceding claims 14 to 16, **characterized in that** at least one impression (27) of a rib (24) is present in the region of the welded-in section (5) of the port (2, 3), preferably two impressions (27) of two ribs (24) are present in the film (9).

18. A pharmaceutical product comprising a medical package designed as a bag (1) according to one of the preceding claims 13 to 17, wherein the bag (1) is filled with a medical liquid, preferably containing an active ingredient.

## Revendications

1. Outil de soudage pour le soudage par impulsions d'un film (9) en matière plastique d'un emballage (1), de préférence médical, comprenant
une mâchoire de soudage (10) comportant une barre de scellement (32) s'étendant le long de la mâchoire de soudage (10), pouvant être appliquée par pression sur le film (9),
dans lequel la barre de scellement (32) comprend une face de scellement chauffante (17) pour la formation d'un cordon de soudure (6, 7, 8), afin de plastifier la matière plastique du film (9) adjacente à la face de scellement (17), et présente, sur le bord de la face de scellement (17) une zone de serrage intérieure (16) adjacente et une zone de serrage externe (16) adjacente pour le serrage du film (9) pendant que le film (9) est soudé,
dans lequel la face de scellement (17) présente une élévation (23) pour le déplacement de la matière plastique plastifiée du film (9), **caractérisé en ce que** l'élévation (23) est assurée par un plateau (23), qui dépasse d'une surface de la face de scellement (17).

2. Outil de soudage selon la revendication précédente, **caractérisé en ce qu'**une zone interne (33i) périphérique de la face de scellement (17) est agencée en retrait par rapport à l'élévation (23) et/ou
que l'élévation (23) est agencée essentiellement au centre de la face de scellement (17).

3. Outil de soudage selon l'une quelconque des revendications précédentes, **caractérisé en ce que** la zone de serrage interne (16) et/ou la zone de serrage externe (16) est ou sont fournies à une température pendant le soudage, qui est inférieure à la température de plastification du film (9) à souder.

4. Outil de soudage selon l'une quelconque des revendications précédentes, **caractérisé en ce que** la zone interne (33i) périphérique de la face de scellement (17) et/ou la zone externe (33e) périphérique de la face de scellement (17) est ou sont essentiellement à la même hauteur que la région de serrage (16) adjacente respective.

5. Outil de soudage selon l'une quelconque des revendications précédentes, comprenant
un dissipateur thermique (12), sur lequel est placé un conducteur chauffant électrique (13), dans lequel une partie supérieure (11) comportant la barre de scellement (32) est placée sur le dissipateur thermique (12) et/ou
une membrane bombée (15), dans lequel la membrane (15) comprend la face de scellement (17).

6. Outil de soudage selon l'une quelconque des revendications précédentes, **caractérisé en ce que** la partie supérieure (11) de l'outil de soudage présente au moins un évidement (19), qui est conçu pour recevoir une section de soudage (5) d'un orifice (3, 4).

7. Outil de soudage selon l'une quelconque des revendications précédentes, **caractérisé en ce que** la face de scellement (17) comprend, dans la zone de l'orifice (2, 3) à souder, en particulier dans la zone de la section de soudage (5) d'un orifice (2, 3), au moins une nervure saillante (24), de préférence deux nervures saillantes (24), et/ou que l'outil de soudage est conçu de telle sorte que la face de scellement (17) peut être chauffée davantage dans la zone de l'évidement (19) pour la section de soudage (5) que dans une zone adjacente de la face de scellement (17), dans laquelle deux films (9) sont soudés ensemble.

8. Outil de soudage selon l'une quelconque des revendications précédentes, **caractérisé,**
**en ce que** le plateau (23) est fourni sur la face de scellement (17) sous forme d'un contour en forme de bande et/ou
**en ce que** le plateau (23) occupe de 30 à 80 %, de préférence 60 à 75 %, de la largeur du cordon de soudure (6, 7, 8) et/ou
**en ce que** le plateau (23) est fourni avec une hauteur entre 10 et 100 µm, de préférence entre 20 et 60 µm.

9. Utilisation d'un outil de soudage selon l'une quelconque des revendications précédentes 1 à 8 pour fabriquer un emballage médical conçu sous forme de sachet (1).

10. Procédé de soudage par impulsions avec un outil de soudage pour le soudage par impulsions d'un film (9) en matière plastique d'un emballage, de préférence médical, selon l'une quelconque des revendications précédentes 1 à 8, dans lequel
une mâchoire de soudage (10) de l'outil de soudage avec une face de scellement chauffante (17) pour la formation d'un cordon de soudure (6, 7, 8) est appliquée par pression sur le film (9), **caractérisé en ce que**
une cavité est formée dans l'outil de soudage lors du soudage, **en ce que** le film (9) est serré sur le bord de la face de scellement (17) pendant le processus de soudage par une zone de serrage (16) plus froide par rapport à la face de scellement (17) s'étendant sur le bord de la face de scellement (17) et
de la matière plastique plastifiée du film (9) est déplacée par une élévation de la barre de scellement (17), de préférence au moins latéralement, le long du cordon de soudure (6, 7, 8) pour compenser des tolérances de forme et/ou dimensionnelles, dans lequel l'épaisseur du film reste essentiellement inchangée dans une zone interne (25i) périphérique du cordon de soudure (6, 7, 8).

11. Procédé selon la revendication précédente, **caractérisé,**
**en ce qu'**une force est exercée sur le film (9) par pression superficielle à la fois depuis la face de scellement (17) et depuis la zone de serrage (16) s'étendant sur le bord de la face de scellement (17) et/ou
**en ce que** lorsque la face de scellement (17) est chauffée, une pression superficielle plus élevée est exercée dans la zone de la face de scellement (17) que dans la zone de serrage (16).

12. Procédé selon l'une quelconque des revendications précédentes 10 ou 11,
**caractérisé en ce que** la matière plastique plastifiée est déplacée par l'élévation de la barre de scellement (17), dans une zone interne (25i) périphérique du cordon de soudure (6, 7, 8) et, en particulier, dans une zone externe (25e) périphérique du cordon de soudure (6, 7, 8), et/ou
**en ce que** l'élévation de la face de scellement (17) est fournie par une élévation (23), de préférence à travers un plateau (23), qui fait saillie depuis une surface de la face de scellement (17) et/ou **en ce que** l'élévation de la face de scellement (17) est fournie par une membrane bombée (15), dans lequel la membrane (15) comprend la face de scellement (17).

13. Emballage médical conçu sous forme de sachet (1), qui comprend des films (9) soudés ensemble,
pouvant être réalisé à l'aide d'un procédé et/ou à l'aide d'un outil de soudage selon l'une des revendications précédentes,
dans lequel le sachet (1) comprend au moins un cordon de soudure (6, 7, 8), qui présente au moins par sections une zone (26) d'épaisseur réduite par rapport à une zone voisine (25, 25i, 25e) adjacente du cordon de soudure (6, 7, 8),
dans lequel la zone voisine (25) est fournie par une zone interne (25i) périphérique du cordon de soudure (6, 7, 8),
**caractérisé en ce que** la zone interne (25i) périphérique du cordon de soudure (6, 7, 8) présente une épaisseur, qui correspond à une épaisseur totale des films (9), qui ne diffère pas de plus de ± 10 %.

14. Emballage médical conçu sous forme de sachet (1) selon la revendication précédente 13, **caractérisé par** un orifice (2, 3) soudé dans le cordon de soudure (6) par l'intermédiaire d'une section de soudage (5), dans lequel la zone interne (25i) périphérique du cordon de soudure (6, 7, 8) présente à cet endroit une épaisseur, qui correspond à une épaisseur du film (9), qui ne diffère pas de plus de ± 10 %.

15. Emballage médical conçu sous forme de sachet (1) selon l'une des revendications précédentes 13 à 14, **caractérisé en ce que** la zone voisine (25) est fournie par une zone externe (25e) périphérique du cordon de soudure (6, 7, 8) et la zone externe (25e) du cordon de soudure (6, 7, 8) présente en particulier une épaisseur, qui correspond essentiellement à une épaisseur du film (9) ou à une épaisseur totale des films (9) et/ou
**en ce que** la zone (26) d'épaisseur réduite s'étend en forme de bande le long d'une région du cordon de soudure (6, 7, 8).

16. Emballage médical conçu sous forme de sachet (1) selon l'une des revendications précédentes 13 ou 15, **caractérisé,**
**en ce que** l'épaisseur du film (9) dans la zone (26) à épaisseur réduite est par rapport à la zone voisine (25) adjacente, réduite d'au moins 10 %, de préférence de 10 à 30%, et/ou
**en ce que** la zone (26) d'épaisseur réduite occupe de 30 % à 80 %, de préférence 60 % à 75 %, de la largeur du cordon de soudure (6, 7, 8).

17. Emballage médical conçu sous forme de sachet (1) selon l'une des revendications précédentes 14 à 16, **caractérisé en ce qu'**au moins une empreinte (27) d'une nervure (24) est présente dans la zone de la section de soudage (5) de l'orifice (2, 3), de préférence deux empreintes (27) de deux nervures (24), sont présentes dans le film (9).

18. Produit pharmaceutique comprenant un emballage médical conçu sous forme de sachet (1) selon l'une des revendications précédentes 13 à 17, dans lequel le sachet (1) est rempli avec un fluide médical contenant de préférence un principe actif.
